# EUROPEAN PATENT SPECIFICATION

(11) **EP 1 552 966 B1**
(45) Date of publication and mention of the grant of the patent: **22.02.2012**
(21) Application number: 03795276.9
(22) Date of filing: 01.09.2003
(51) Int. Cl.: B60C 11/03, B60C 5/00, B60C 11/04, B60C 11/01, B60C 11/00

(54) **PNEUMATIC TIRE AND TIRE WHEEL ASSEMBLY**
LUFTREIFEN UND REIFENRADANORDNUNG
PNEU ET ENSEMBLE ROUE ET PNEU

(30) Priority: 30.08.2002 JP 2002252754; 30.08.2002 JP 2002254053; 30.08.2002 JP 2002255455
(43) Date of publication of application: 13.07.2005
(73) Proprietor: Bridgestone Corporation, Tokyo 104-8340 (JP)
(72) Inventor: OHSAWA, Yasuo, Bridgestone Corp. Technical Center, Kodaira-shi, Tokyo 187-8531 (JP); SAWADA, Takafumi, Bridgestone Corp. Technical Ctr., Kodaira-shi, Tokyo187-85 31 (JP); SAGUCHI, Takanari, Bridgestone Corp. Technical Ctr, Kodaira-shi, Tokyo 187-8531 (JP); FUJITA, Kazuto, Bridgestone Corp. Technical Center, Kodaira-shi, Tokyo 187-8531 (JP); TOMITA, Arata, Bridgestone Corp. Technical Center, Kodaira-shi, Tokyo 187-8531 (JP)
(74) Representative: Whalley, Kevin
(86) International application number: PCT/JP2003/011162
(87) International publication number: WO 2004/024472

(56) References cited:
- EP-A1- 1 029 712
- EP-A1- 1 029 712
- JP-A- 01 067 404
- JP-A- 11 208 217
- JP-A- 63 159 108
- JP-A- 2000 296 704
- US-A- 3 286 756
- US-A- 5 213 641
- US-A- 6 105 644

## Description

### [TECHNICAL FIELD]

This invention relates to a pneumatic tire simultaneously establishing a noise reduction during the rotation of the tire and a resistance to hydroplaning and improving a resistance to uneven wear as well as a tire-wheel assembly.

### [BACKGROUND ART]

As a conventional technique improving wet performances of a tire and controlling an uneven wear and a tire noise, there is one disclosed in JP-A-10-217719.

According to this technique, when a tire tread is virtually divided into an outer region directing to an outer side of a vehicle and an inner region directing to an inner side of the vehicle with respect to an equator of the tire, one longitudinal outer main groove linearly extending in a circumferential direction of the tire is arranged in the outer region and first and second longitudinal inner main grooves linearly extending in the circumferential direction of the tire are arranged in the inner region, and these longitudinal main grooves are asymmetric with respect to the equator of the tire, and outer slant grooves inclined at an angle of 45-70° with respect to the circumferential direction are arranged at given intervals in an outer shoulder portion between the longitudinal main groove in the outer region and a ground contact end of the outer region and inner slant grooves inclined at an angle of 60-80° with respect to the circumferential direction and opposed to the outer slant grooves are arranged at given intervals in an inner shoulder portion between the second longitudinal inner main groove and a ground contact end of the inner region, and central slant grooves inclined at an angle of 20-45° with respect to the circumferential direction and in the same direction as the outer slant groove are arranged at given intervals in a crown portion between the longitudinal outer main groove and the second longitudinal inner main groove. Thus, the wet performances are enhanced and noise through columnar resonance can be reduced under the action of the one longitudinal outer main groove and the two longitudinal inner main grooves, and also premature wear at the outer region of the tire mounted onto the vehicle can be controlled.

As the other conventional technique, as disclosed in JP-A-2000-238510, there is a pneumatic tire for a vehicle wherein a tread pattern is asymmetrically formed with respect to a circumferential direction of a tread surface and comprises outer and inner regions having shoulder block rows and a central region defining both sides by circumferential grooves belonging to the above regions, and lateral grooves are continued from the shoulder block row of the inner region to the central region, and a width of the central region in the tread pattern is 25-35% of a tread width, and alternating lateral grooves among the lateral grooves extending from the shoulder block row of the inner region at maximum are continued in the central region as a groove substantially crossing at least the central region and these grooves are inclined at an angle of 30° at maximum with respect to the equatorial line over at least 1/3 of a length of the central region. In this technique, the drainage property is improved by making the wearing of the pattern uniform as far as possible and a good influence is given to the noise during the rotation.

In these tires, however, the sufficient consideration is not made on the resistance to hydroplaning at a road surface having a water depth deeper than a wet road surface. Further, since they are designed without considering the application of a camber angle to the tire when the tire is mounted onto a vehicle, the noise reduction during the rotation of the tire and the resistance to hydroplaning can not be well established in the actual running of the vehicle mounted with such tires, and also there is a problem that uneven wear is created in an inner portion of the tire mounted on the vehicle. US 5213641 describes a pair of radial tires with directional and symmetrical tread patterns according to the preamble of claim 1.

The invention is to solve the above problems inherent to the conventional techniques and to provide a pneumatic tire in which the noise reduction during the rotation of the tire and the improvement of the resistance to hydroplaning are simultaneously established in a higher dimensionality and also the resistance to uneven wear is effectively improved.

### [DISCLOSURE OF THE INVENTION]

In the designing of the asymmetric tread pattern, it has widely and generally been conducted from the old time that the negative ratio is made small in an axially outer portion of the tire mounted on the vehicle by emphasizing the running performances of the tire on a dry road surface, while the negative ratio is made large in an axially inner side portion of the tire mounted on the vehicle for ensuring the wet performances.

In the tire having a tread pattern of such a construction, however, when a negative camber is particularly applied to the tire in use, there are problems that the wearing of the tread in the axially inner side portion becomes violent and also the steering stability at a state near to a straight running state lowers and further the resistance to hydroplaning is not improved.

Considering the tread wearing among them, a ground contact length of a shoulder portion at the axially inner side is longer than that of a shoulder portion at an axially outer side in the application of the negative camber, so that if a slight slip angle such as a toe angle or the like is applied to the tire, the inner shoulder portion bears too much a lateral force against a lateral slippage. Also, a longitudinal deflection at the axially inner side becomes larger than a longitudinal deflection at the axially outer side in the application of the negative camber and such a large longitudinal deflection brings about the reduction of the rotating radius of the tire. For this end, a small-diameter side portion of a ground contact face of the tread is relatively subjected to a force in a braking direction by dragging through a large-diameter side portion thereof. They result in a cause of premature wear of the tread at the axially inner side, or uneven wear of the tread.

In this case, the bearing of force becomes generally large in a region near to the ground contact end and a nucleus for the uneven wear is apt to be easily created in this region, and the thus created uneven wear gradually progresses toward a side of an equatorial line of the tire.

On the other hand, in order to improve the steering stability at a running state near to a straight running state such as the running on an expressway or the like, it is effective to provide a tread pattern so that the rigidity in the widthwise direction of the tread is made large in each of a central portion of the tread increasing particularly a belt tension under the filling of an internal pressure and a portion of the tread particularly prolonging a ground contact length to be largely affected by a rigidity of the tread pattern. In case of giving the negative camber to the tire, a portion having a longest ground contact length is displaced somewhat from the tread central portion toward the axially inner side. In the latter case, it is preferable to form a tread pattern having a high rigidity in the widthwise direction extended between the tread central portion and the longest ground contact length portion, e.g. a rib. By arranging a circumferential main groove to the rib at the axially inner side or in the both sides of the rib is formed a drainage flow line substantially directing to the circumferential direction of the tread, whereby water on the road surface can be drained efficiently to advantageously prevent the occurrence of hydroplaning phenomenon.

As a result of analysis through a finite element method for improving the resistance to hydroplaning, it is clear that a most water-reserving portion or a portion having a low drainage function is existent in a side having a long ground contact length rather than the tread central portion due to the fact that the longest ground contact length portion is displaced somewhat from the tread central portion toward the axially inner side in the application of the negative camber. Therefore, it is possible to improve the resistance to hydroplaning by arranging the circumferential main groove in such a portion to enhance the drainage performance.

Also, it is preferable that the drainage is conducted toward the outer side in both outer regions located outward from the circumferential main grooves. In this case, the drainage groove is preferable to be extended along a direction of water flow line. Since the flow lihe in the vicinity of the shoulder portion corresponding to the portion of the axially inner side directs toward the widthwise outer side at an angle of not less than 45° with respect to the widthwise direction of the tread, it is preferable that the drainage groove is formed in such a flow line direction and opened to the circumferential groove at least located at the widthwise outer side for more further improving the resistance to hydroplaning.

In the pneumatic tire according to the invention, therefore, three or more circumferential main grooves asymmetrically positioned with respect to an equatorial line of the tire and extending linearly and continuously in the circumferential direction of the tread are formed in a ground contact face of the tread and one or more land part rows are formed in each of the resulting central region and both side regions, in which a sum of groove volume in a circumferential direction in lateral grooves formed in a shoulder land part row corresponding to an axially inner side position of the tire mounted on a vehicle per unit width is made smaller than a sum of groove volume in the circumferential direction in lateral grooves formed in a shoulder land part row corresponding to an axially outer side position of the tire mounted on the vehicle, and the land part row in the central region including the equatorial line of the tire or located nearest to the equatorial line is rendered into a rib, and a plurality of slant grooves extending at an average inclination angle of not less than 45° with respect to a widthwise direction of the tread are arranged in a second inner land part row located at a side of the equatorial line adjacent to a shoulder land part row in the axially inner side and these slant grooves are opened to the circumferential main groove at least located adjacent to the second inner land part row of the axially inner side.

The term "circumferential main groove" used herein means a groove having a groove width corresponding to not less than 2.5% of a tread width.

Moreover, the term "tread width" used herein means a ground contact width when the tire is mounted onto an approved rim and filled with a defined air pressure and loaded under a mass corresponding to a maximum load capacity. In this case, the approved rim means a rim defined in the following standard, and the maximum load capacity means a maximum mass applicable to the tire in the following standard, and the defined air pressure means an air pressure defined in correspondence with the maximum load capacity in the following standard.

The standard is one decided by an industrial standard effective in an area producing tires or using them, for example, "YEAR BOOK of THE TIRE AND RIM ASSOCIATION INC." in USA, "STANDARDS MANUAL of The European Tyre and Rim Technical Organization" in Europe, and "JATMA YEAR BOOK" of The Japan Automobile Tire Manufacturers Association Inc. in Japan.

According to this tire, the sum of groove volume in the circumferential direction in the lateral grooves formed in the shoulder land part row corresponding to the axially inner side is made smaller than the sum of groove volume in the circumferential direction in the lateral grooves formed in the shoulder land part row corresponding to the axially outer side to effectively deal with the aforementioned causes of creating the uneven wear in case of applying the negative camber to the tire in use, whereby the balance of braking force and traction force between the axially inner side and the axially outer side can be enhanced to effectively improve the resistance to uneven wear.

That is, the uneven wear resulted from the fact that the inner shoulder land part row bears a larger lateral force in the application of the negative camber, toe angle or the like can be done by making the ratio of the grooves occupied in this shoulder land part row small to enhance the rigidity of this land part row. Also, the uneven wear resulted from the fact that the rotating radius at the axially inner side is made small by the longitudinal deflection of the tire can be done by deforming the shoulder land part row in a direction of reducing the lateral groove width within the ground contact face to suppress the contraction of the rotating radius based on the fact that the total volume of the lateral grooves in such a land part row is made small.

Further, when the negative camber is applied to the tire, the ground contact form of the tire is determined by an alignment in the vehicle, an internal pressure of the tire, a mass loaded and the like, and the land part row in the central region as a portion having a longest ground contact length is rendered into a rib to enhance the rigidity in the widthwise direction of the tread, whereby the steering stability can be effectively improved a gainst the application of a relatively small slip angle to the tire under a running state near to the straight running state.

When the negative camber is applied to such a tire, the water pressure distribution at the axially inner side is made higher than that at the axially outer side due to the fact that water on the road surface is easily reserved in the circumferential main groove located inward from the equatorial line of the tire and extending nearest to the equatorial line and the second land part row located adjacent to such a circumferential main groove at the axially inner side.

In order to improve this problem, slant grooves guiding water on the road surface in a direction separating from the tread center are arranged in the second inner land part row and the extending direction of the slant grooves is made not less than 45° with respect to the widthwise direction of the tread in conformity with the inclination of the drainage flow line at the axially inner side, whereby the smoothness and rapidness of the drainage are guaranteed.

When the rib of the central land part row having a high rigidity in the widthwise direction as mentioned above is arranged so as to extend between the tread central portion and the portion having a longest ground contact length, the belt tension in the second inner land part row is smaller than that in the tread central portion and also the ground contact length in the inner land part row shorter than that in the rib and the ratio of the second inner land part row contributing to the steering stability is not so large, so that even if the extending angle of the slant grooves in the second inner land part row is made not less than 45° as mentioned above, it does not exert a large influence on the steering stability. Also, the ratio of the grooves in the shoulder land part row at the axially inner side is made smaller than that in the shoulder land part row at the axially outer side as previously mentioned, so that even if the extending angle of the slant groove becomes large, the resistance to uneven wear is not so damaged against the bearing of the inner shoulder land part row to force in the ground contact face.

Furthermore, in connection with the resistance to hydroplaning, the drainage flow line in the shoulder land part row at the portion of the axially outer side extends substantially in the widthwise direction of the tread, so that it is preferable to extend the lateral grooves in the shoulder land part row as a portion of the axially outer side toward the flow line direction. On the other hand, in the shoulder land part row at a portion of the axially inner side, the ground contact form is rounded to effectively obstruct the penetration of water on the road surface into the inner side of the ground contact face of the tread under an action inherent to a ground contact profile of the tread, so that there is caused no lowering of the resistance to hydroplaning without arranging the lateral grooves in this row.

Preferably, four or more circumferential main grooves are arranged, and a plurality of lateral grooves are arranged in a second outer land part row adjacent to an equatorial line side of a shoulder land part row at the portion of the axially outer side, wherein one end of each lateral groove is opened to the circumferential main groove and the other end thereof is terminated in the land part row.

In order to improve the resistance to hydroplaning, it is preferable to make the number of the lateral grooves or the like large. In this case, however, it can not be avoided to increase noise due to the butting of the edge of the lateral groove with the road surface during the running of the tire under loading. Also, if the adjoining circumferential main grooves are communicated with each other through the lateral grooves, a large columnar resonance sound common to both the circumferential main grooves is created.

In the invention, therefore, one end of the lateral groove is opened to the circumferential main groove to ensure the excellent drainage performance, while the other end is terminated in the land part row, whereby the columnar resonance frequency of each circumferential main groove is separated to disperse peak values of the resonance sound and the butting length of the edge of the lateral groove with the road surface is reduced to realize the reduction of the noise.

Also, it is preferable that a circumferential fine groove having a groove width corresponding to less than 2.5% of a tread width is arranged in the shoulder land part row being the axially inner side to divide the shoulder land part row into two parts, and an average inclination angle of the lateral groove arranged in the shoulder land part row being the axially outer side with respect to the widthwise direction of the tread is made not more than 15°.

In this case, a portion of the inner shoulder land part row in the vicinity of the ground contact end easily tending to cause the uneven wear is separated from the other portion of this shoulder land part row by the circumferential fine groove, whereby the progress of the uneven wear generated in the portion near to the ground contact end to the other portion of the shoulder land part row can be suppressed advantageously.

As a result of the analysis on the resistance to hydroplaning, it is clear that the position of the drainage flow line directing to the circumferential direction of the tread is displaced from the tread central portion toward the inner shoulder side in the application of the negative camber as compared with the case of applying no negative camber, while the ground contact profile is rounded at the side of short ground contact length and is effective in the drainage toward the outer side in the widthwise direction of the tread, and the extending direction of the drainage flow line in the outer shoulder land part row is not more than 15° with respect to the widthwise direction of the tread. In the invention, therefore, the extending direction of the lateral groove in the outer shoulder land part row is made not more than 15° with respect to the widthwise direction of the tread to enhance the drainage efficiency and ensure the improvement of the resistance to hydroplaning.

On the other hand, the widthwise rigidity of the shoulder land part row being the axially outer side of shorter ground contact length largely affects the steering stability in the application of a relatively large slip angle as particularly exemplified by the running on mountain path. In this case, therefore, an average angle of the lateral groove formed in the shoulder land part row is made not more than 15° with respect to the widthwise direction of the tread to suppress the lowering of the widthwise rigidity of such a land part row, whereby the excellent wear resistance is provided while ensuring the high steering stability.

Preferably, the shoulder land part row as a portion of the axially inner side is divided into tow parts in the widthwise direction by a fine groove extending in the circumferential direction, and one divided portion located at the side of tread end is a narrow-width rib, and a plurality of small holes separated from the groove are arranged in the other wide-width divided portion which may be provided with the lateral grooves.

For example, when a load is applied to the tire at a state of giving the negative camber angle to the tire, the ground contact length at the ground contact face of the tread in the circumferential direction of the tread becomes longer in the portion of the axially inner side and shorter in the outer portion as a standard of tire posture at a camber angle of zero, and the wheel rim is approached to the road surface to make a rotating radius small in the axially inner side increasing the ground contact length and the rotating radius is made large in the axially outer side decreasing the ground contact length, so that there is a problem that a relative force in a braking direction is applied to the portion of the axially inner side to cause a premature wear, for example, at a state of straight running the vehicle. As a conventional technique for suppressing such a premature wear, JP-A-2001-354010 discloses that the rigidity of the shoulder land part at the axially inner side in the circumferential direction of the tire mounted onto the vehicle set to the negative camber is made larger than the rigidity of the shoulder land part at the axially outer side in the circumferential direction of the tire to enhance the wear resistance in the braking direction of the shoulder land part at the axially inner side or at the side increasing the ground contact length.

However, it has newly been found that according to only this construction, when force applied to the tire from a lateral direction thereof is increased by cornering or the like, the ground contact pressure of the shoulder land part increasing the rigidity in the circumferential direction becomes large and a nucleus for the uneven wear is easily created at this part.

On the contrary, the shoulder land part row at the axially inner side is divided into two parts in the widthwise direction by the fine groove extending in the circumferential direction and one narrow-width divided part located at the side of the tread end is acted as a wear-sacrificing portion as mentioned above, whereby the progress of the wear created at this part toward the other wide-width divided part located at the side of the tread center can be advantageously suppressed to protect the wide-width divided part from the premature wear.

Also, a plurality of small holes separated from the groove are formed in the wide-width divided part to reduce shearing rigidity of such a divided part at the ground contact face in all directions, whereby the bearing of force under a high flexibility can be advantageously decreased to advantageously mitigate the premature wear even if the wide-width divided part is dragged into the braking direction or even if an input of lateral force to such a part is increased.

In such a tire, when the groove width of the circumferential fine groove formed in the shoulder land part row of the axially inner side is gradually or stepwise widened at a side of the tread surface as compared with the groove bottom, even if foreign matters such as pebbles and the like on the road surface are bitten into the fine groove, the getting-off of the foreign matter from the fine groove is facilitated, whereby it is effectively prevented to create the uneven wear resulted from the running of the tire at a state of biting the foreign matter in the fine groove under loading in the other part divided by the fine groove and located at the equatorial line side of the tire.

Also, when a total volume of plural small holes formed in the wide-width divided part at the shoulder land part row of the axially inner side in the circumferential direction of the tread is made larger at a side of the fine groove than at a side of the equatorial line of the tire, as the bearing of lateral force becomes large near to the ground contact end, the rigidity of the wide-width divided part is reduced to receive an input of the force on a wider region, whereby the deformation can be decreased to effectively prevent the wearing of such a divided part. Also, the high steering stability and the tread durability can be ensured as compared with the case that the total volume of small holes is made large over the whole of the wide-width divided part.

In this case, the change in the total volume of small holes can be realized, for example, by changing an opening size or depth of the small hole, by changing an arranging pitch of the small holes or the like.

On the other hand, when the tread structure including the small hole forming region for the wide-width divided part is a tread structure that the wide-width divided part provided with the small holes is contacted in at least a part of the small hole forming region with ground at a posture of applying a camber angle of -0.5 under an action of a load corresponding to 40% of a maximum load capacity, even if the load becomes small and the ground contact width becomes narrow in the rear wheeled tire as compared with the front wheeled tire in the braking of FF vehicle, the effect of reducing the rigidity under the action of the small holes can be developed effectively.

Also, when a side face of a narrow-width rib formed by dividing the shoulder land part row of the axially inner side through the circumferential fine groove and located at the side of the tread end is a concave curved form having a center of curvature at the outer side of cross sectional profile line, the wearing volume of the narrow-width rib as a wear sacrificing portion can be reduced to suppress the change of appearance to a new tire small and improve the wearing appearance.

In such a tire, it is preferable that a center line of a rib as a land part row of a central region located nearest to the equatorial line of the tire is positioned toward the axially inner side with respect to the equatorial line and a plurality of widthwise fine grooves extending obliquely with respect to the widthwise direction of the tread are arranged in such a rib.

In this case, it is preferable that the inclination angle of the widthwise fine groove is an average angle of 5-55° and a groove width thereof is not more than 2 mm.

In order to improve the griping force and steering stability on a road surface in case of running on a dry road surface at a high speed or the like, it is preferable to arrange a land part row such as a rib being high in the rigidity in the widthwise direction of the tread and capable of rapidly and surely transmitting the input to a high tension portion of a belt in the tire between a tread central portion becoming largest in a tension of the belt having a so-called hoop effect to bring about a high rigidity of the tread and a portion being longest in the ground contact length of the tread, or at a position extending between both the portions.

In such a rib, however, when the escape deformation of the tread rubber in the circumferential direction is not allowed, the uneven wear is caused in this rib. In the invention, therefore, the widthwise fine grooves having a width of not more than 2 mm and an extending angle of 5-55° are formed in the rib as a land part row so as to allow a proper escape deformation in the circumferential direction while ensuring the rigidity in the widthwise direction of the tread.

The reason why the groove width is limited to not more than 2 mm is due to the fact that a slight groove width is enough to absorb the escape deformation of rubber in the circumferential direction and if it exceeds 2 mm, the pattern noise increases but also the lowering of the rigidity in the widthwise direction of the rib becomes large. Also, when the angle of the fine groove is less than 5°, it is not avoided to increase the pattern noise due to the impact contact of the groove edge with the road surface, while the upper limit of 55° is due to the fact that when it exceeds 55°, the rigidity in the width wise direction of the rib becomes too low.

Preferably, the widthwise fine groove is formed so as to incline in a depth direction in form of a flat face, a curved face or the like provided that the fine groove is separated away from each other in a groove width direction, a circumferential direction of the tread or the like around a middle portion of the extending direction of the fine groove. In this case, the number of the flat faces or the like inclined in a direction of separating from each other may be three or more per one fine groove.

According to this construction, the escape deformation of rubber in the circumferential direction is sufficiently allowed in the presence of the fine groove having a given groove width, while the fine groove is mutually interfered at the side of the groove bottom rather than the opening position in the widthwise direction of the tread, whereby the lowering of the rigidity of the land part row as a rib in the widthwise direction can be prevented effectively.

At least a part of the plural widthwise fine grooves can be terminated in the rib as a land part row at both ends of the extending direction, whereby the steering stability can be more improved while keeping the rigidity in the widthwise direction of the rib at a high level.

That is, the allowance of the escape deformation of rubber in the circumferential direction is particularly required at a widthwise central portion of the rib having no escape of rubber, so that even if the widthwise fine groove is extended in this portion, the escape deformation of rubber in an axially outer side direction of the rib is possible in the vicinity of the side wall of the rib. On the other hand, since the widthwise rigidity in the vicinity of the side wall of the rib is low, the widthwise fine groove is removed from the vicinity of the side wall, whereby the escape deformation of rubber in the circumferential direction can be allowed while suppressing the lowering of the widthwise rigidity of the rib.

Furthermore, it is preferable that a center line of a rib as a land part row of a central region located nearest to the equatorial line of the tire is positioned toward the axially inner side with respect to the equatorial line and a plurality of recesses having substantially an ellipsoidal form inclusive of oval form or the like are arranged in such a rib instead of the aforementioned widthwise fine grooves, and a major axis of each of recess is extended at an angle of 5-45° with respect to the widthwise direction of the tread, and a side of a shoulder land part row located at the axially inner side of the rib is defined by a circumferential main groove extending straightforward.

In order to prevent the wearing of the rib in the vicinity of the equatorial line, it is sufficient to dispose a slight space in the rib so as to form the escape site of rubber in the circumferential direction as previously mentioned. In the central portion of the rib having no escape side of rubber and being less in the contribution to the widthwise rigidity is arranged the recess having substantially an ellipsoidal form instead of the widthwise fine groove, whereby the widthwise rigidity is ensured while forming the escape site of rubber.

When the direction of the major axis in the recess is less than 5° with respect to the widthwise direction of the tire, the pattern noise becomes too large, while when it exceeds 45°, the widthwise rigidity of the rib too lowers.

Also, the circumferential main groove defining the rib at the side of the shoulder land part row of the axially inner side is rendered into a straight groove, whereby the high resistance to hydroplaning can be produced.

When a sipe opening to the side wall of the rib is disposed in at least a part of the plural recesses having substantially an ellipsoidal form so as to extend in the major axis direction of the recess, air sealed and compressed in the recess during the contacting with ground can be discharged toward an exterior through the sipe, so that it can be prevented to make a sound by releasing air sealed in the recess and having a high compression pressure from such a recess in the trailing.

Further, it is preferable that a rib of a land part row of a central region located nearest to the equatorial line of the tire is defined by a pair of straight extending circumferential main grooves and a groove width of a circumferential main groove located at a side of the shoulder land part row of the axially inner side is made wider than a groove width of a circumferential main groove located at a side of the shoulder land part row of the axially outer side.

Considering the difference in the ground contact form of the tread resulted from the difference of aspect ratio or the like of the tire, there is a knowledge that when a maximum width and a maximum length of the ground contact form are compared with each other in the actual running of the tire under loading, if the maximum width is larger than the maximum length, the circumferential main groove drains a greater amount of water as compared with the case that the ground contact length becomes large. According to this knowledge, when the maximum width is larger than the maximum length as in the former case, the drainage property can be enhanced to improve the resistance to hydroplaning, for example, by arranging a greater number of the circumferential grooves in the tread central portion wherein the flow line direction of the drainage is substantially the circumferential direction.

Now, it is known that the circumferential main groove forms a columnar tube equal to the ground contact length in the ground contact face to result in the occurrence of columnar resonance sound. The magnification of the columnar resonance sound differs in accordance with the position in the widthwise direction of the tread even if the size of the columnar tube is same. There is newly obtained a knowledge that when the columnar resonance sound at the axially inner side in which the ground contact length of the tread becomes long under the application of negative camber bordering the tread center position is reduced at a greater ratio as compared with the increasing ratio of the columnar resonance sound at the axially outer side in which the ground contact length becomes shorter toward the side of the tread end. In the invention, the width of the circumferential main groove located at the side of the shoulder land part row in the axially inner side in which the ground contact length of the tread becomes long is made wider than that of the other circumferential main groove, whereby the improvement of the resistance to hydroplaning is produced while suppressing the occurrence of the resonance sound.

In the tire as mentioned above, when each block defined by the lateral grooves in the shoulder land part row at the portion of the axially outer side is provided with a peripheral upheaved portion gradually decreasing a surface height toward at least one of a side edge of the block and a central region of the block, the further improvement of the steering performance can be realized.

When the tire comprising the blocks provided with the peripheral upheaved portion is run under loading without applying the camber angle, a slant upheaved face of the peripheral upheaved portion is impact-contacted with the road surface in the leading of the block to create a large impact sound.

However, when the peripheral upheaved portion as mentioned above is formed in the shoulder block of the axially outer side in the tire used under an application of the negative camber, since the bearing of load by the outer shoulder block is less during the straight running, the increase of noise resulted from the presence of the peripheral upheaved portion can be prevented effectively.

On the other hand, when the slip angle is applied to the tire for the steering, the shoulder portion of the axially outer side is contacted with ground to increase the ground contact pressure of this portion irrespectively of the presence or absence of the negative camber, so that the peripheral upheaved portion can uniformize the ground contact pressure distribution of the block under an action inherent to the block. In the application of the slip angle, the noise due to the slipping of the block becomes predominant and the influence of the noise due to the impact of the block onto the road surface becomes relatively small, so that the steering performance can be effectively improved by arranging the peripheral upheaved portions without increasing the noise.

Preferably, each of leading edge height and trailing edge height in the blocks defined by the slant grooves in at least second inner land part row is varied in the widthwise direction of the tread, while each high height portion is extended in the circumferential direction of the tread while changing positions in the widthwise direction of the tread in accordance with the positions in the circumferential direction.

In case of applying the negative camber to the tire, the ground contact length becomes short and the ground contact pressure becomes low in the portion of the axially outer side, so that the occurrence of strike sound resulted from the impact contact of the block with the road surface is relatively less in such outer side portion, while the ground contact length and ground contact pressure become large in the portion of the axially inner side and the ratio of creating the strike sound becomes large. In this case, since the land part row in the central region is the rib, there is no occurrence of noise due to the impact contact of the block, and also the inner shoulder land part row is generally less in the number of the lateral grooves and small in the ratio of creating the strike sound, while the noise created in the blocks defined by the slant grooves in the second inner land part row becomes large.

In the invention, therefore, each of leading edge height and trailing edge height in the blocks defined by the slant grooves in at least second inner land part row are varied in the widthwise direction of the tread, while each high height portion is extended in the circumferential direction of the tread while changing positions in the widthwise direction of the tread in accordance with the positions in the circumferential direction. Thus, firstly, the impact contact of the leading edge with the road surface is gradually carried out for quite a long time to disperse the impact contact force with time, whereby the occurrence of strike noise at an initial contact stage of the block is mitigated. Secondly, the trailing edge is gradually separated apart from the road surface for quite a long time to suppress the occurrence of the noise at the last contact stage. Thirdly, the compression force produced in the block during the running of the tire is dispersedly supported with the whole of the block by changing positions in the tread widthwise direction of each of the high height portions extending in the circumferential direction of the tread in accordance with the circumferential positions, whereby noise level produced by the block can be suppressed.

In other words, when the high height portion is not changed in the widthwise direction, a large compression stress is locally applied to only a high height portion of the block and an input level becomes large.

In addition to these facts, when each of the high height portions extending in the circumferential direction of the tread is continued in the circumferential direction of the tread, the noise level can be suppressed to a low level over a full time ranging from the contact of the block with the road surface to the separation from the road surface.

Also, it is preferable that an acute angle corner of a block or the like defined by at least one of the lateral grooves and slant grooves extending at an average angle of not less than 45° with respect to the widthwise direction of the tread is provided with a slant face of a flat face, a convex face or the like gradually reducing a height toward a tapered end.

In the second inner land part row arranged adjacent to the rib as the land part row of the central region and provided with the slant grooves for improving the drainage performance, it is effective to make the rigidity of the block in the widthwise direction large for enhancing the steering stability. That is, it is advantageous to make the rigidity difference to the rib in the second inner land part row adjacent to the rib for approaching the increase of cornering force accompanied with the increase of the slip angle applied to the tire to a linear form. In this case, the slant face is formed on the block in the second inner land part row, whereby the rigidity of the block in the widthwise direction of the tread is enhanced and also the more improvement of the drainage performance is ensured.

When a projection part projecting into the groove is disposed in a groove wall of the circumferential main groove opposite to a groove wall opening to at least one of the lateral groove and the slant groove at a groove opening position and a position opposite to the widthwise direction of the tread, as regards the strike sound created resulting from the side edge of the land part having a rigidity higher than that of a groove portion such as lateral groove or the like, the lowering of the rigidity in the groove portion such as the lateral groove or the like is effectively supplemented by the projection portion projecting into the circumferential main groove to mitigate the rigidity difference between the rigidity of a portion forming the groove portion and the rigidity of the land part such as block or the like, whereby the strike sound as mentioned above can be advantageously suppressed, which is true independently of the application of the negative camber to the tire.

Furthermore, it is preferable that the groove depth of the slant groove arranged in the second inner land part row and extending at an average angle of not less than 45° with respect to the widthwise direction of the tread is deepened gradually or stepwise from a side of the equatorial line of the tire toward a side of the tread end.

In order to improve the drainage efficiency by the slant groove arranged in the second inner land part row and contributing to the improvement of the drainage performance, it is preferable to gradually increase the cross sectional area of the slant groove toward the side of the tread end or render into a sufficiently large constant value. However, in order to contribute the second inner land part row adjacent to the land part row of the central region to the improvement of the steering stability, it is effective to ensure the rigidity of the block or the like in this land part row in the widthwise direction of the tread at a large value as previously mentioned. In the invention, therefore, for the purpose of simultaneously establishing the resistance to hydroplaning and the steering stability at a high dimension, the groove depth of the slant groove is made shallow at the side of the equatorial line and deepened therefrom toward the side of the tread end, whereby the cross sectional area is increased toward the side of the tread end.

Now, the extending directions of the slant grooves formed in the second inner land part row with respect to the equatorial line of the tire may be the same or may be alternately opposite to each other in the circumferential direction of the tread.

In case of applying the negative camber to the tire, the slant grooves in the second land part row largely contribute to the improvement of the drainage performance as previously mentioned. When the tread pattern is a directional pattern specifying the rotating direction, the function expected by the slant groove can be sufficiently developed in the former case that the extending direction of the slant groove with respect to the equatorial line of the tire is rendered into a given constant direction.

However, when the tread pattern is a non-direction pattern, the right and left wheeled tires are relatively rotated in opposite directions. In the tire having such a pattern, therefore, it is preferable that the extending directions of the slant grooves are made alternately opposite directions with respect to the equatorial line of the tire in the circumferential direction of the tread as in the latter case for ensuring the excellent drainage performance even in the rotation of any directions.

Further, it is preferable that an integral value of the rigidity in the widthwise direction of the tread over a full ground contact length in each of the land part rows defined by the circumferential main grooves is within a range of 50% from a large value between mutually adjacent land part rows.

In this case, the rigidity of the shoulder land part row of the axially inner side divided by the circumferential fine groove into two parts in the widthwise direction is defined as a rigidity of only the wide-width divided portion located from the fine groove toward the center.

The term "integral value over full contact length" used herein can be determined, for example, by measuring a sum of widthwise rigidity of each land part row defined by the circumferential grooves over a full periphery of the tread, and dividing the ground contact length of such a land part row in the actual mounting by a peripheral length of the land part row after the filling of an air pressure and multiplying the resulting divided value to the above sum.

More concretely, when one land part row is comprised of, for example, 60 mono-pitch blocks, the integral value over the full ground contact length can be determined by measuring the widthwise rigidity of one block, multiplying the measured value to 60 times to determine a sum of the rigidity, and multiplying the sum to (number of blocks contacted with ground/60). On the other hand, when the land part row is comprised of variable-pitch blocks, the sum of rigidity can be determined by measuring the widthwise rigidity of the block having each size, multiplying the number of blocks having each size over the periphery thereto, and adding values of rigidities every each size.

In order to improve the steering performance, it is important that the cornering force produced by applying the slip angle to the tire is large but also such a cornering force increases at a state near to linearity accompanied with the increase the slip angle.

When an internal pressure is filled in a tire having a sectional shape and structure symmetrical with respect to an equatorial plane, a belt tension on the equatorial plane becomes frequently highest and also the rigidity of the tread becomes maximum at this portion based on such a belt tension. In the straight running of a vehicle under a condition of applying no camber to the tire, a longest portion of the ground contact length positions on the equatorial plane. Therefore, both the belt rigidity and ground contact length become maximum on the equatorial plane, and hence the tread portion on the equatorial plane is a portion producing a maximum cornering force.

On the other hand, the maximum portion of the ground contact length is not coincident with the equatorial plane of the tire in the straight running under a condition of applying the negative camber. In this case, if the rigidities of the land parts in the tread are the same, a portion having a long ground contact length can produce a large cornering force. Also, when the slip angle starts to increase from the straight running provided with the camber, it is clear from detailed observations that a portion producing a greatest cornering force is existent between a portion having a maximum belt tension and a portion having a longest ground contact length.

As the slip angle is further increased, the longest portion of the ground contact length moves toward the outer side of the cornering and the bearing of load at the outer side of the cornering becomes large. In this case, the amount generating the cornering force of the tire at the outer side position of the cornering increases together with the increase of the ground contact length and the increase of the load bearing.

Also, such a cornering force is changed due to the fact that the rigidity of each land part row in the widthwise direction of the tread differs in accordance with the widthwise position of the tread.

For this end, there is examined the relation between the change of the rigidity of the land part row in the widthwise direction of the tread and the change of the cornering force. As a result, it has been found that the lowering of the rigidity of the land part row in the widthwise direction generally brings about the lowering of the cornering force, while when the lowering of the rigidity between the mutually adjoining land part rows is within 50%, the ground contact length of the land part row is prolonged by the distortion change of such a land part row in the application of the slip angle to the tire and hence the lowering of the rigidity is compensated by the increase of the ground contact length and the cornering force can be kept substantially at a constant level. On the other hand, when the lowering of the rigidity exceeds 50%, it is impossible to produce the increase of the ground contact length coincident with the lowering of the rigidity.

In the invention, therefore, the difference of the rigidity in the widthwise direction of the tread between the mutually adjoining land part rows is within 50% of a larger value in order to realize substantially a linear increase of the cornering force accompanied with the increase of the slip angle.

At a state that the aforementioned tire is mounted onto an approved rim and inflated under a normal air pressure and loaded under a mass corresponding to the maximum load capacity, an effective ground contact area at either axially inner side or axially outer side is larger than that at the remaining other side, and a radial distance from a tangential line on the outer side surface of the tread perpendicular to the equatorial plane of the tire up to the ground contact edge of the tread at a posture of filling the normal air pressure is made larger at the mounting side having a small effective ground contact area than at the other mounting side. This is preferable in a point of controlling conicity force easily produced in a tire of asymmetric pattern. In this case, it is more preferable that the relation between a ratio of small and large effective ground contact areas (S-large/S-small) and a ratio of large and small radial distance (H-large/H-small) satisfies S-large/S-small = A x (H-large/H-small) wherein A is 1.0-1.4.

In the cornering of the vehicle, it is widely performed that the rigidity of the land part at the axially outer side of the tread in the tire existing at the outer side of the cornering, in which the load particularly becomes large and the ground contact area increases, is made larger than that at the axially inner side to enhance the cornering force. As a concrete construction therefor, it is general that the negative ratio at the axially outer side is made small to enhance the rigidity of the land part, while the negative ratio at the axially inner side is made large to ensure the drainage property.

However, when adopting so-called asymmetric tread pattern having such a construction, it is revealed that the ground contact area at the axially outer side is made larger than that at the axially inner side, so that the widthwise shearing force of the tread contacting face subjected from the road surface in the ground contact face of the tire largely differs between the axially inner side and the axially outer side in the straight running of the vehicle, and such a difference causes the occurrence of conicity force as in the application of the camber angle to the tire to thereby generate lateral force directing to the axially outer side in the tire.

As a result of various examinations on the conicity force, it has been found that the widthwise shearing force generated in the tread ground contacting face is largest in the tread shoulder portion and such a shearing force becomes large as the separating distance of the tread ground contacting face from the equatorial line of the tire becomes large and is very sensitive to the separating distance.

In the asymmetric tread pattern wherein the effective ground contact area at either axially inner side or axially outer side is made larger than that at the other position, therefore, the radial distance of from the tangential line on the outer side surface of the tread perpendicular to the equatorial plane of the tire up to the ground contact edge of the tread is made larger at the mounting side having a small radial distance that that at the other mounting side, whereby the widthwise shearing force produced in the tread shoulder portion at the side having a large radial distance is contributed to offset the conicity force generated at the side having the large effective ground contact area and particularly improve the steering stability at a small steering angle.

In this case, it is preferable that the conicity force is more effectively offset when the relation between a ratio of small and large effective ground contact areas (S-large/S-small) and a ratio of large and small radial distance (H-large/H-small) satisfies S-large/S-small = A x (H-large/H-small) wherein A is 1.0-1.4.

When A is less than 1.0, the conicity force in the opposite direction is easily generated, while when it exceeds 1.4, the offset effect of the conicity becomes small.

On the other hand, the invention is made for effectively controlling the transmission of an input from the road surface to the tire into a wheel shaft when a connecting portion between a rim and a disc of the wheel locates at an outer side of the vehicle mounted with respect to the equatorial plane of the tire mounted onto the rim.

When the connecting portion between the rim and the disc locates at the outer side of the vehicle with respect to the equatorial plane of the tire, a portion of the rim protruding in an inner side direction of the vehicle has a structure as cantilevered by the disc viewing at a radial section of the wheel, so that the rigidity of the wheel particularly becomes low against a radial input from the side of the tire to a bead seat of the rim located at the inner side of the vehicle and such a radial input particularly causes a large deformation of the wheel itself and such a deformation of the wheel is transmitted to a wheel shaft, which is a cause of vibrations on the wheel shaft or the like. Therefore, it is required to control the transmission of the input from the road surface into the rim in tires, particularly a tire wherein the ground contact pressure and ground contact length become large at the axially inner side in the application of the negative camber.

In the tire-wheel assembly according to the invention, therefore, the connecting portion between the rim and the disc of the wheel is located toward the outer side of the vehicle to be mounted with respect to the equatorial plane of the tire when the wheel is assembled with the aforementioned pneumatic tire, particularly the tire wherein the shoulder land part row at the axially inner side is widthwisely divided into two parts through the fine groove extending in the circumferential direction and the divided part located at the side of the tread end is a narrow-width rib and a plurality of small holes separated from the groove are formed in the other wide-width divided part which may be provided with the lateral grooves.

As a result of main studies on solid propagation sound for the purpose of enhancing the silentness in the vehicle interior, it is clear that vibrations of the wheel largely exerts on the solid propagation sound, which has hitherto been considered to be mainly elastic vibrations of the tire consisting of an elastomer such as rubber or the like.

As to the tire vibrations transmitted from the tread portion of the tire through a pair of sidewall portions, a pair of bead portions and the wheel toward the vehicle body, as the transmission ratio from each sidewall portion to the wheel is examined, there is frequently caused a difference between the transmission ratio through the rim end located at the front side of the wheel disc and the vibration transmission ratio through the rim end located at the rear side of the wheel disc, and it has been confirmed that which side of easily causing wheel shaft vibrations is determined by the connecting position between the rim and the disc in the wheel irrespectively of an offset amount of the wheel disc with respect to the rim and hence the equatorial plane of the tire. For example, when the connecting position is existent from the equatorial plane of the tire toward the axially outer side, vibrations at the axially inner side easily generate vibrations in the wheel shaft.

Therefore, in the shoulder land part row located at the axially inner side of the tire, the compression rigidity is decreased by the small holes to reduce reaction force against an input from irregularity of the road surface or the like to the tire, whereby the transmission of vibrations to the wheel shaft can be suppressed to enhance the silentness of the vehicle interior. On the other hand, even if the rigidity is large and the reaction force against the input to the tire becomes large in the shoulder land part row located at the axially outer side, the transmission ratio of vibrations from the wheel to the wheel shaft is low in this portion, so that the vibrations of the wheel shaft becomes not large and the silentness is not damaged.

### [BRIEF DESCRIPTION OF THE DRAWINGS]

FIG. 1 is a developed view of a tread pattern illustrating an embodiment of the invention.
FIG. 2 is a developed view of an other tread pattern.
FIG. 3 is a developed view of further other tread pattern.
FIG. 4 is a view showing a modified example of total volume of small holes.
FIG. 5 is a schematic view showing an example of forming a circumferential fine groove and a profile form of a side face of a narrow-width rib at a side of a tread end.
FIG. 6 is a schematic view illustrating a profile form of a ground contact face.
FIG. 7 is a developed view of a tread pattern illustrating another embodiment of the invention.
FIG. 8 is a plan view illustrating an example of forming widthwise fine grooves in a land part row of a central region.
FIG. 9 is a view showing a relative relation of a width of a circumferential main groove.
FIG. 10 is a view illustrating an example of forming recesses in a land part row of a central region.
FIG. 11 is a section view in a widthwise direction of a block illustrating peripheral upheaved portions.
FIG. 12 is a developed view of a tread pattern showing the other embodiment.
FIG. 13 is a perspective view showing an example of forming a high height portion in a block of a second inner side land part row.
FIG. 14 is a developed view of a tread pattern showing the other embodiment.
FIG. 15 is a developed view showing a further embodiment.
FIG. 16 is a view illustrating a still further embodiment.
FIG. 17 is a developed view of a tread pattern showing a yet further embodiment.
FIG. 18 is a schematic view showing integral value of widthwise rigidity in each land part row over a whole of a ground contact length by an index.
FIG. 19 is a developed view of a tread pattern showing an other embodiment.
FIG. 20 is a view illustrating a modified example of a tread pattern.
FIG. 21 is a schematic view showing a tire construction for suppressing conicity force.
FIG. 22 is a section view of a main part showing an embodiment of the tire-wheel assembly.
FIG. 23 is a developed view of a tread pattern in a tire of Comparative Example 1.
FIG. 24 is a developed view of a tread pattern in a tire of Comparative Example 2.
FIG. 25 is a developed view of a tread pattern in a tire of Example 2.
FIG. 26 is a developed view of a tread pattern in a tire of Comparative Example 6.
FIG. 27 is a developed view of a tread pattern in a tire of Comparative Example 7.
FIG. 28 is a developed view of a tread pattern in a tire of Examples 13 and 16.
FIG. 29 is a developed view of a tread pattern in a tire of Example 14.
FIG. 30 is a developed view of a tread pattern in a tire of Examples 15 and 17.
FIG. 31 is a developed view of a tread pattern in a tire of Example 18.
FIG. 32 is a developed view of a tread pattern in a tire of Example 19.
FIG. 33 is a developed view of a tread pattern in a tire of Example 20.
FIG. 34 is a developed view of a tread pattern in a tire of Example 21.
FIG. 35 is a developed view of a tread pattern in a tire of Example 5.
FIG. 36 is a developed view of a tread pattern in a tire of Example 22.
FIG. 37 is a developed view of a tread pattern in a tire of Comparative Example 10.

### [BEST MODE FOR CARRYING OUT THE INVENTION]

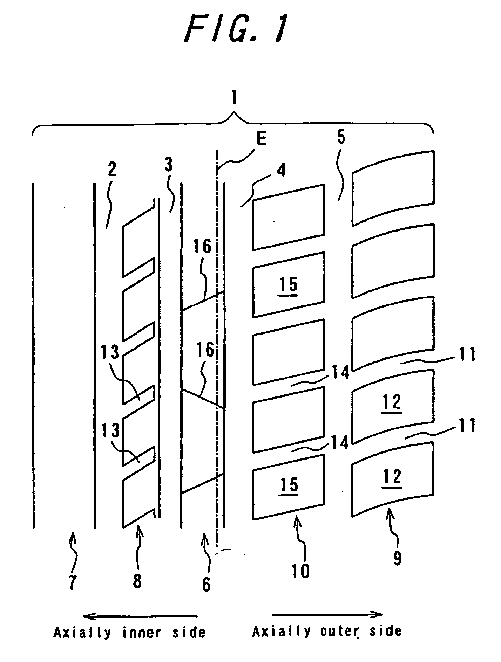

In a developed view of a tread pattern shown in FIG. 1, E is an equatorial line of a tire.

Moreover, the internal structure of this tire is the same as in a general radial tire, and an illustration thereof is omitted here.

In a tread contacting face 1 are formed four circumferential main grooves 2, 3, 4, 5, which are located asymmetrically with respect to the equatorial line E of the tire and extend linearly and continuously in a circumferential direction, whereby there are defined one central region land part row located nearest to an equatorial line E and adjacent to a left side of the main groove inclusive of the equatorial line E in this figure, and two land part rows consisting of a shoulder land part row 7 located at a side of a tread end and a second inner land part row 8 located between the shoulder land part row 7 and the central region land part row 6 in a left-half side region of the figure being an axially inner side mounted onto a vehicle, and two side region land part rows consisting of a shoulder land part row 9 and a second outer land part row 10 located between the shoulder land part row 9 and the central region land part row 6 in a right-half portion of the figure being an axially outer side.

In the illustrated embodiment, the central region land part row 6 and the shoulder land part row 7 at the axially inner side are rendered into ribs, respectively, and the shoulder land part row 9 at the axially outer side is rendered into a block row consisting of blocks 12 defined by lateral grooves 11 extending at an average angle of preferably not more than 15° with respect to a widthwise direction of the tread, while a sum of groove volume in the circumferential direction per unit width of lateral grooves, which may be formed in the shoulder land part row 7 of the axially inner side, is made smaller than a sum of groove volume in the circumferential direction of the lateral grooves 11 formed in the shoulder land part row 9 of the axially outer side.

In the second inner land part row 8 are arranged a plurality of slant grooves 13 extending at an average extending angle of not less than 45° with respect to the widthwise direction of the tread in the same extending direction as the lateral grooves 11, and these slant grooves 13 are opened at least to the circumferential main groove 2 located at the side of the shoulder land part row of the axially inner side. Therefore, the other end of the slant groove 13 may be terminated in the land part row as shown in the figure, or may be opened to the circumferential main groove 3 located at the side of the central region land part row.

In the second outer land part row 10 are arranged a plurality of lateral grooves 14 extending in the same direction as in the lateral grooves 11 and the slant grooves 13 and opening to the adjoining circumferential main grooves 4, 5, respectively, whereby the land part row 10 is rendered into a block row consisting of blocks 15.

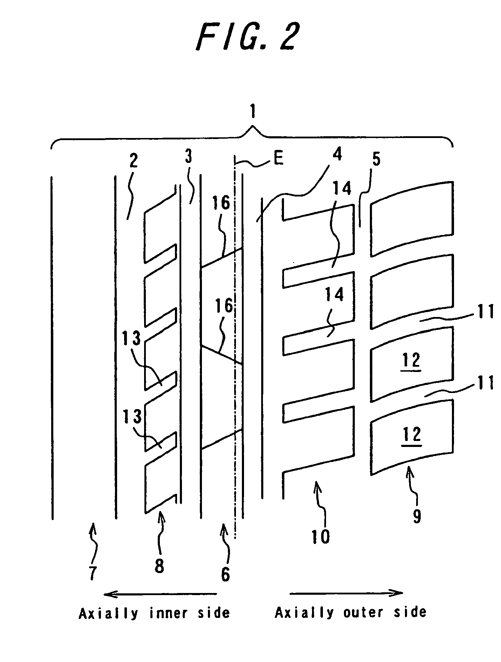

Moreover, the lateral groove 14 may be opened at either one end to the circumferential main groove and terminated at the other end in the land part row. In this case, as shown in FIG. 2, it may be opened to the circumferential main groove 5 located at the side of the shoulder land part row of the axially outer side or may be inversely opened to only the circumferential main groove 4.

In the rib of the central region land part row may be arranged sipes 16 extending in a direction crossing the rib for enhancing the ground contacting property and ensuring an edge component in the widthwise direction of the tread.

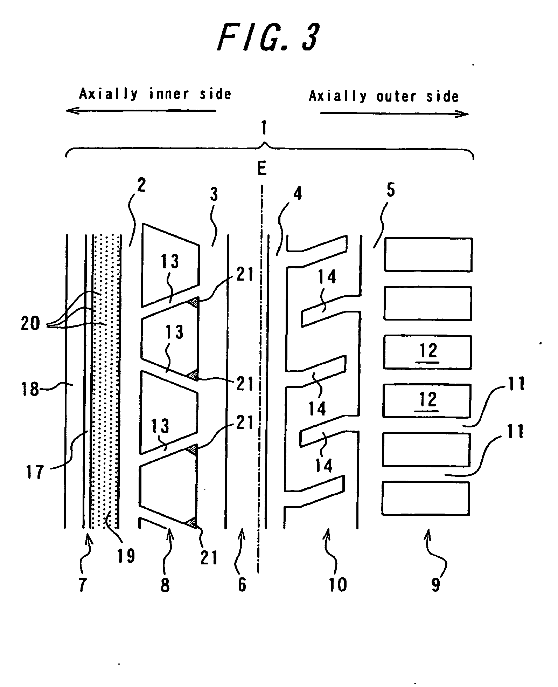

FIG. 3 is a developed view of a tread pattern illustrating another embodiment.

In this case, three or more circumferential main grooves, four grooves 2-5 in the figure continuously extending straightforward in a circumferential direction of a tread are formed in the tread asymmetrically with respect to the equatorial line E of the tire, whereby there are defined a central region land part row 6 located nearest to the equatorial line E and extending on the equatorial line in the figure, two land part rows consisting of a shoulder land part row 7 located at a side of a tread end and a second inner land part row 8 located between the shoulder land part row 7 and the central region land part row 6 in a left-half side region being an axially inner side in the figure, and two land part rows consisting of another shoulder land part row 9 located at a side of a tread end and a second outer land part row 9 located between the shoulder land part row 9 and the central region land part row 6 in a right-half side region being an axially outer side in the figure.

In this figure, the central region land part row 6 somewhat biased toward to the axially inner side is rendered into a rib, while the shoulder land part row 7 of the axially inner side is divided into two portions in the widthwise direction of the tread through a fine groove 17 extending in the circumferential direction of the tread wherein a divided portion located to a side of the tread end is a narrow-width rib 18 and a divided portion located near to the tread center is a wide-width rib 19 somewhat wider than the above divided portion.

A total volume of lateral grooves, which may be formed in the wide-width rib 19 but is not formed in the figure, per unit width in the circumferential direction of the tread is made smaller than that of plural lateral grooves 11 formed in the shoulder land part row 9 of the axially outer side, and an average extending angle of the lateral groove 11 with respect to the widthwise direction of the tread is preferably not more than 15°.

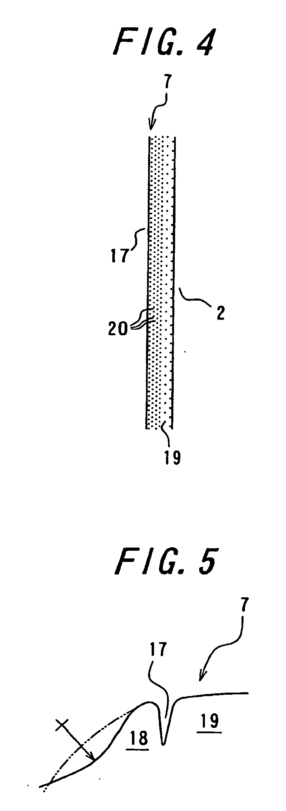

Further, a plurality of small holes 20 separated from the groove are formed in the wide-width rib 19. Preferably, a total volume of these small holes 20 in the circumferential direction of the tread is made larger at a side of the fine groove 17 than at a side of the tread center as shown, for example, in FIG. 4.

Moreover, the total volume of the small holes 20 is made larger at the side of the fine groove by making the forming density of the small holes 20 large at the side of the fine groove in this figure. Alternatively or in addition thereto, the required total volume may be obtained by making at least one of hole diameter and hole depth large at the side of the fine groove.

As shown by a cross-sectional view in FIG. 5, the groove width of the circumferential main groove 17 formed in the shoulder land part row 7 of the axially inner side is preferable to be gradually or stepwise widened toward a side of the tread surface. Also, in the narrow-width rib 18 divided and formed by the fine groove 17, a side face thereof at the tread end face is preferable to be a concave curved form having a center of curvature at an outer side of a cross-sectional profile line as illustrated in FIG. 5.

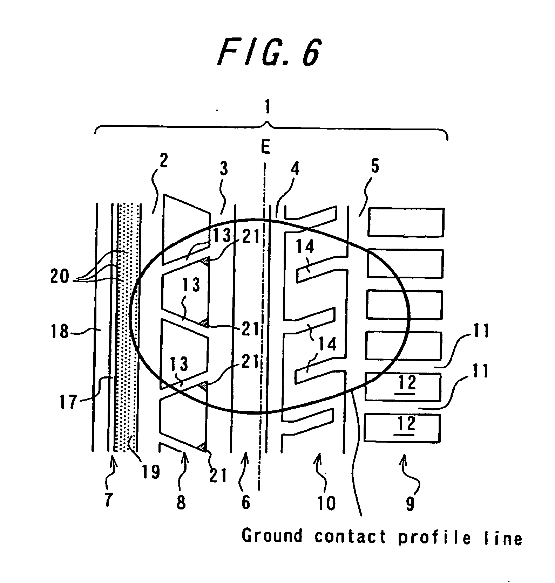

More preferably, the tread and hence the tread contacting face is so constructed that at least a part of the small hole forming region in the wide-width rib 19 is included in a ground contact region enclosed by a ground contact profile line in FIG. 6 under an action of a load corresponding to 40% of a maximum load capacity during the rotation of the tire at a camber angle of -0.5° under loading.

In addition, a plurality of slant grooves 13 extending at an average angle of preferably not less than 45° with respect to the widthwise direction of the tread are formed in the second inner land part row 8, and these slant grooves 13 are at least opened to the circumferential main groove 2 extending at the side of the tread end.

The slant groove 13 opened at both ends to the mutually adjoining circumferential main grooves 2, 3 in the figure may develop sufficient drainage performance in a tire of a directional pattern in which the rotating direction of the tire is specified into one direction when the inclination direction of the groove with respect to the equatorial line E is constant, but in a tire not specifying the rotating direction, it is preferable that the extending directions of the slant grooves with respect to the equatorial line E of the tire are opposite to each other in the circumferential direction as shown in the figure in order to ensure the drainage performance even in any rotating directions.

Also, it is preferable that the depth of the slant groove is gradually deepened from the side of the equatorial line of the tire toward the side of the tread end in order to simultaneously establish the sufficient drainage performance and the high land part rigidity.

Furthermore, in connection with the slant groove 13 extending at an average angle of not less than 45° with respect to the widthwise direction of the tread and the other lateral grooves, it is preferable that a slant face 21 gradually decreasing a height toward a top and having a flat face, a convex curved face or the like as shown by oblique lines in the figure is formed in an acute corner part of a block sandwiched between the slant groove and the circumferential groove, at least an acute corner part located at the side of the equatorial line of the tire as shown in FIG. 3, whereby it is attempted to improve the drainage property while ensuring the rigidity of the acute corner part.

Moreover, as shown in FIG. 3, a plurality of lateral grooves 14 opening at one end to the circumferential groove and terminating at the other end in the land part row are arranged in the second outer land part row 10 so as to alternately open to the adjoining circumferential main grooves 4, 5 in the circumferential direction of the tread.

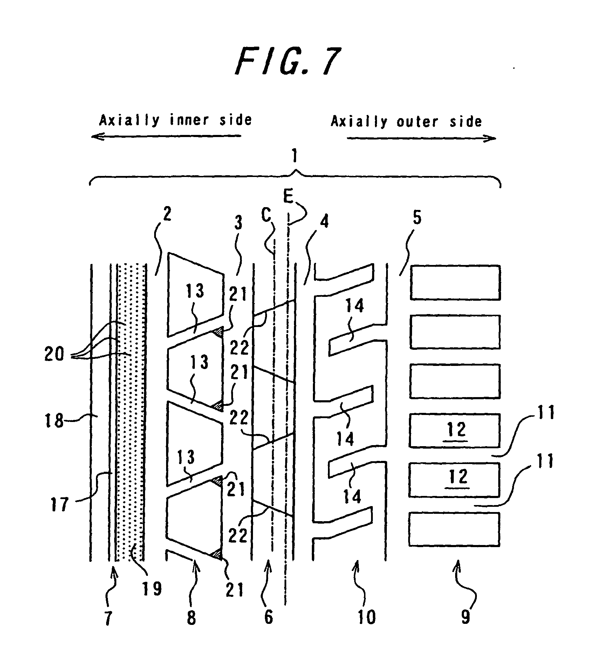

FIG. 7 is a developed view of a tread pattern illustrating the other embodiment wherein a widthwise center line C of the central region land part row 6 is biased to a direction of the axially inner side in which the ground contact length of the tread becomes long through the application of a camber angle with respect to the equatorial line E of the tire and a plurality of widthwise fine grooves 22 extending at an average angle of 5-45° with respect to the widthwise direction of the tread and having a groove width of not more than 2 mm are formed in the land part row 6 to allow circumferential deformation of the land part row 6 as a rib.

In this case, an arranging pitch of these widthwise fine grooves 22 alternately extending opposite to each other in the circumferential direction for ensuring a rigidity balance of the land part row 6 or the like can be selected by considering escape deformation of rubber in the circumferential direction and reservation of widthwise rigidity.

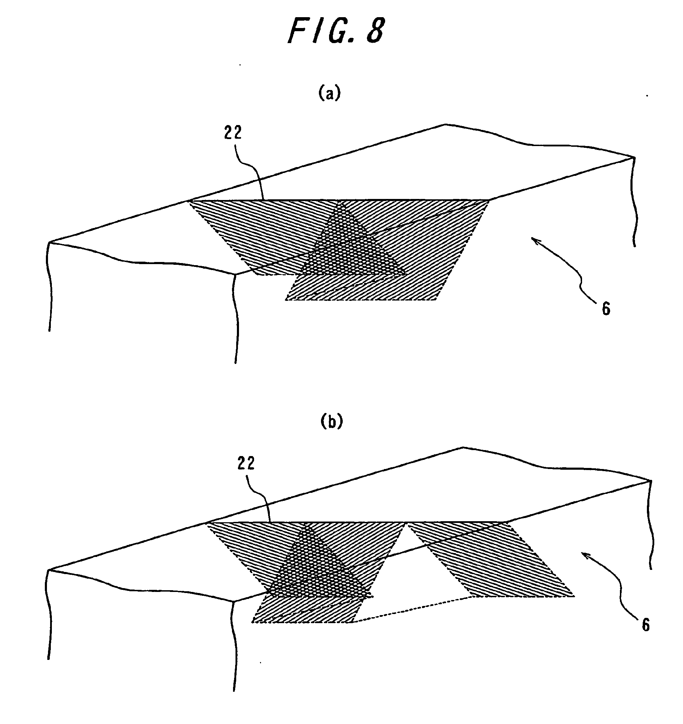

At least a part of the thus formed widthwise fine grooves 22 may be terminated at both ends in the rib. Also, each of the fine grooves 22 is preferable to be formed so as to incline in a depth direction in form of a flat face, a curved face or the like provided that the fine groove is separated away from each other in a groove width direction as shown by oblique lines in partial perspective views of FIGS. 8(a) and (b).

Moreover, the inclination direction may be a circumferential direction, a direction perpendicular to the opening of the fine groove or the like, and also three or more inclined portions may be formed in one fine groove 22.

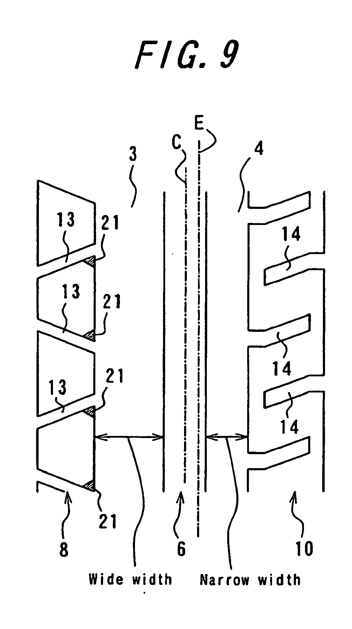

As to the pair of straight circumferential main grooves 3, 4 defining the central region land part row 6, it is preferable that the groove located at the side of the second inner land part row 8 is made wider than the groove located at the side of the second outer land part row 10 as shown in FIG. 9, whereby the drainage property is enhanced to suppress the columnar resonance sound.

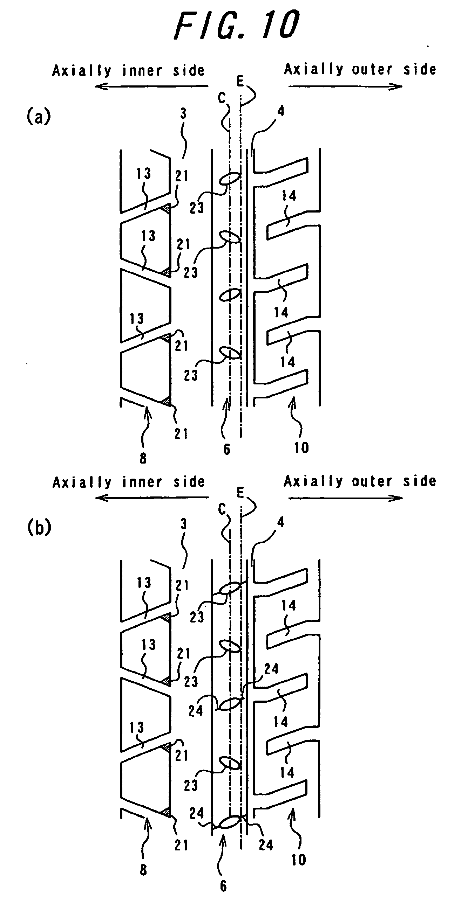

FIG. 10 is a view of a main part of the other embodiment, in which a center line C of the central region land part row 6 is biased toward a side of prolonging the ground contact length by the application of a camber angle with respect to the equatorial line E, and a plurality of recesses 23 having substantially an ellipsoidal form are formed in the land part row as a rib at a posture of inclining a major axis at an angle of 5-45° with respect to the widthwise direction of the tread and the extending directions of the major axes of these recesses 23 are alternately opposed in the circumferential direction of the tread and further a portion of the land part row 6 located at the side of the second inner land part row 8 is defined by the circumferential main groove 3 linearly extended.

Moreover, the recess is possible to be an oval form or the like. As shown in FIG. 10(b), at least a part of the recesses 23 may be provided at both ends of the major axis with sipes 24 extending in the major axis direction of the recess 23. Also, the sipe 24 may be arranged only at the one end side of the recess, or the length of the sipe 24 may be terminated in the land part row or opened to the circumferential main groove.

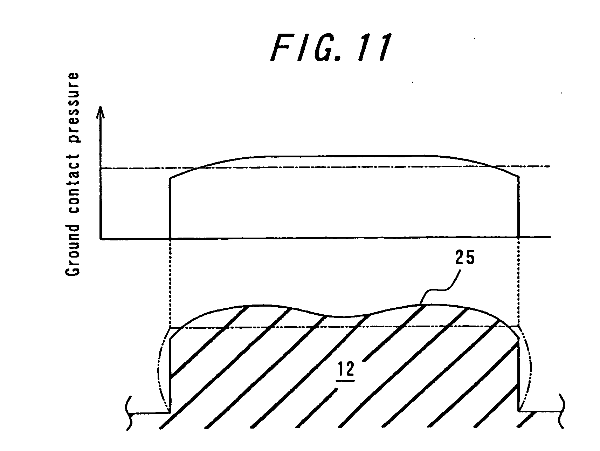

In the tire as mentioned above, each of the blocks 12 defined in the shoulder land part row of the axially outer side by the lateral grooves 11 may be provided with a peripheral upheaved portion 25 gradually decreasing a surface height toward at least one of a side edge of the block and a central region of the block as shown by a widthwise sectional view in FIG. 11, toward both in the figure. The peripheral upheaved portion 25 functions to uniformize the ground contact pressure in the contacting of the block 12 with ground.

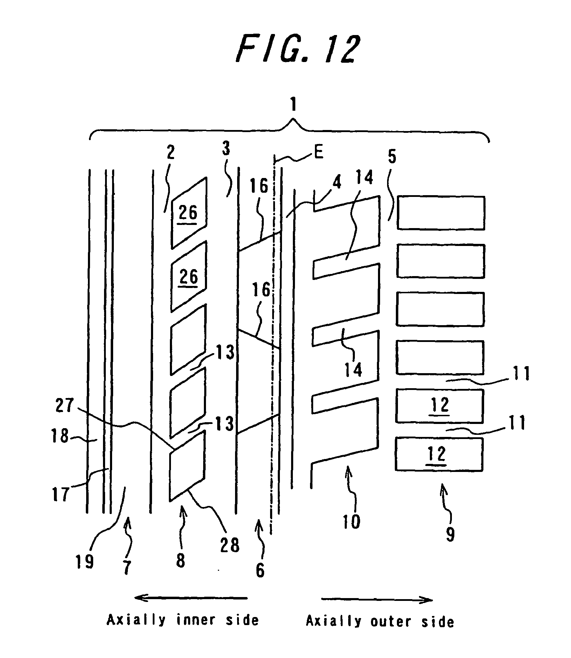

FIG. 12 is a developed view of a tread pattern illustrating the other embodiment.

In this case, a circumferential fine groove 17 is formed in the shoulder land part row 7 of the axially inner side to divide the shoulder land part 7 into a narrow-width rib 18 located at the side of the tread end and a wide-width rib 19 located at the side of the equatorial line, and slant grooves 13 extending at an equal inclination angle in the same direction are formed in the second inner land part row 8 and opened to the circumferential main grooves 2, 3 to render the land part row 8 into a block row consisting of blocks 26, and lateral grooves 11 in the shoulder land part row 9 of the axially outer side are extended substantially in the widthwise direction of the tread.

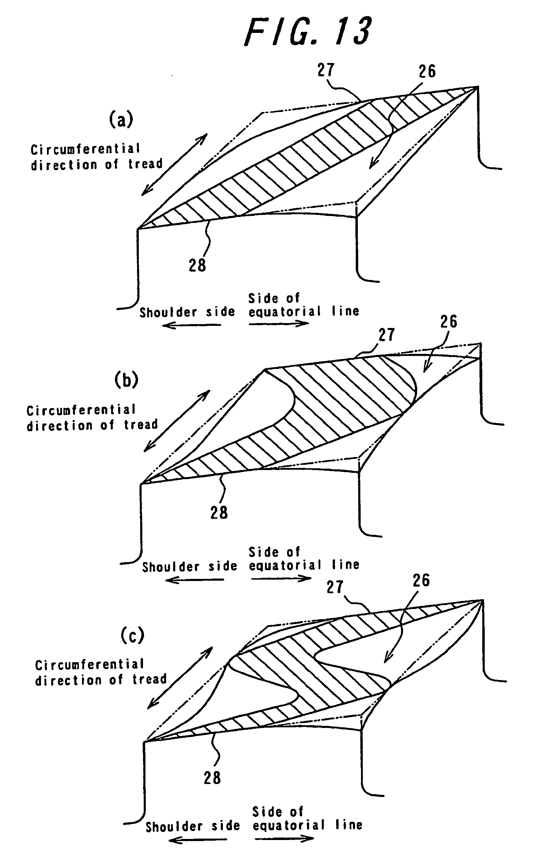

When the second inner land part row 8 is rendered into the above block row, each height of a leading edge 26 and a trailing edge 27 in each block 26 constituting the block row is varied in the widthwise direction of the tread as shown by a schematic perspective view in FIG. 13(a), while each high height portion can be extended in the circumferential direction of the tread while changing positions in the widthwise direction of the tread in accordance with the positions in the circumferential direction as shown by oblique lines in the figure. In this case, it is preferable that both the heights are continuously formed in the circumferential direction of the tread as shown in the figure.

In the illustrated embodiment, the high height portion of the leading edge 27 first contacting with ground is biased toward the side of the equatorial line of the tire, and also the high height portion of the trailing edge 28 latest separating from the road surface is biased toward the shoulder side of the axially inner side, but the biasing directions of these height portions can be opposed thereto. Also, the extending form of the high height portion in the circumferential direction of the tread is rendered into a bending form as shown in FIG. 13(b), whereby the high height portions of the leading edge 27 and the trailing edge 28 can be biased toward the shoulder side of the axially inner side, or both the portions can be biased in an opposite direction thereto.

Furthermore, the extending form of the high height portion can be rendered into a zigzag form as shown in FIG. 13(c).

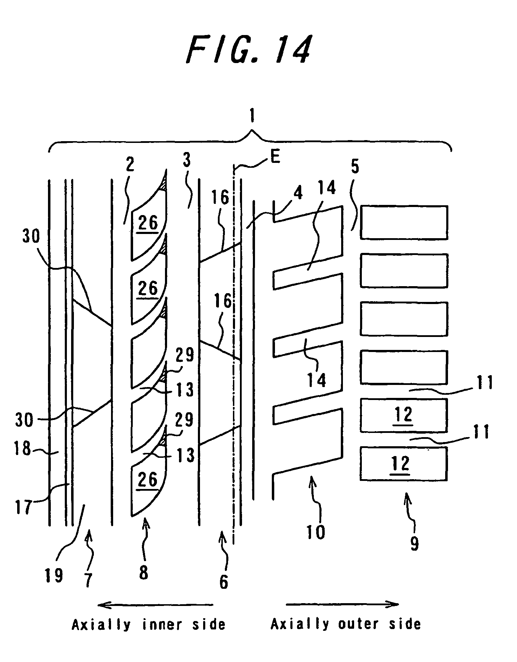

FIG. 14 is a view illustrating a further embodiment, in which the slant grooves 13 formed in the second inner land part row 8 are extended in the form convexly curving downward in the figure, while a slant face 29 gradually decreasing a height toward a tapered end as shown by oblique lines in the figure is formed in an acute corner portion of each block 26 sandwiched between the slant groove 13 and the circumferential main groove 3, whereby the rigidity of the block 26, particularly the acute corner portion thereof in the widthwise direction of the tread can be enhanced, and the volume of the groove portion can be substantially increased.

Such a slant face can be formed in the block or the like other than the block 26. This is particularly effective with respect to the acute corner portion defined by the lateral groove, slant groove or the like extending at an average angle of not less than 45° with respect to the widthwise direction of the tread and the circumferential main groove.

Moreover, numeral 30 is a sipe formed in the wide-width rib 19 in the shoulder land part row 7 of the axially inner side.

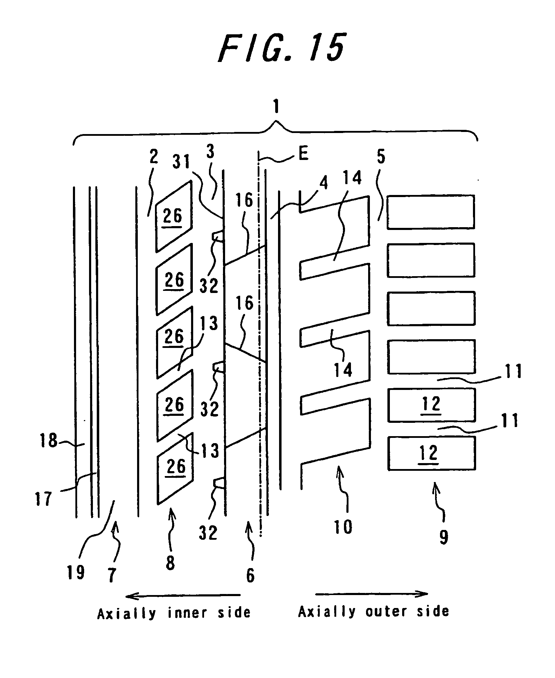

FIG. 15 is a view illustrating a still further embodiment.

In the circumferential main groove 3 located at the side of the equatorial line of the tire opening the slant groove 13 formed in the second inner land part row 8, a projection part 32 projecting into the groove is integrally disposed on the groove bottom in a groove wall 31 of the circumferential main groove 3 opposite to a groove wall opening to the slant groove 13 at an opening position of the groove 13 opposite to the widthwise direction of the tread. According to this embodiment, the difference of rigidity in the second inner land part row 8 due to the presence of the slant groove 13 during the running of the tire under loading can be mitigated by the projection parts 32 to reduce the strike sound of the edge of the slant groove 13 on the road surface.

In the illustrated embodiment, the projection part 32 is arranged on alternate opening of the slant groove to the circumferential main groove 3, but the projection part 32 may be arranged in positions corresponding to all openings. Also, the projection part may be arranged in correspondence with the opening position of the other lateral groove.

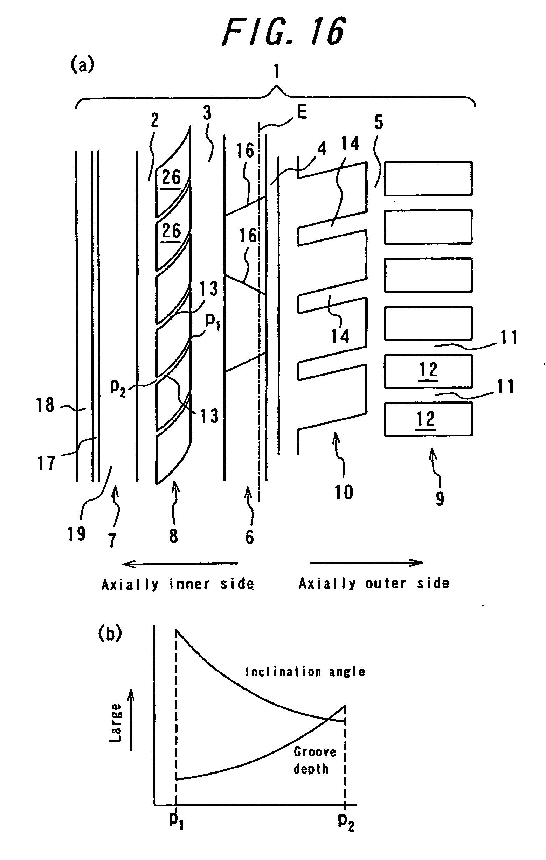

In an embodiment shown in FIG. 16, a width of the slant groove 13 formed in the second inner land part row 8 and extending curvedly in a convex form downward in the figure is made narrower than that shown in FIG. 14, and a depth thereof is gradually deepened from the side P₁ of the equatorial line of the tire toward the side P₂ of the tread end as shown by a graph in FIG. 16(b).

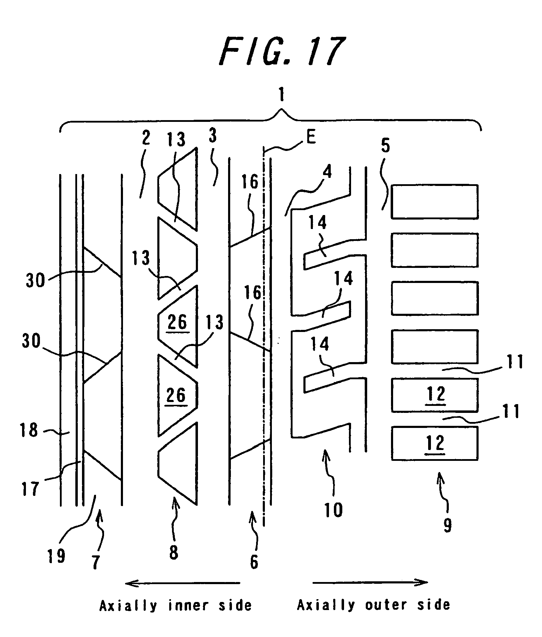

In an embodiment of FIG. 17, the extending directions of the slant grooves 13 formed in the second inner land part row 8 with respect to the equatorial line of the tire are opposite to each other in the circumferential direction of the tread likewise FIGS. 3, 6, 7 and the like, and also one end of each of the lateral grooves 14 formed in the second outer land part row 10 is alternately opened to the circumferential main grooves 4, 5 sandwiching the outer land part row 10 in the circumferential direction of the tread and the other end thereof is terminated in the land part, and further sipes 30 alternately changing the inclination direction in the circumferential direction are formed in the wide-width rib 19 of the shoulder land part row 7 of the axially inner side as shown in FIG. 14.

In each of the thus constituted land part rows, an integral value of the rigidity in the widthwise direction of the tread over a full ground contact length is within a range of 50% from a large value between mutually adjacent land part rows.

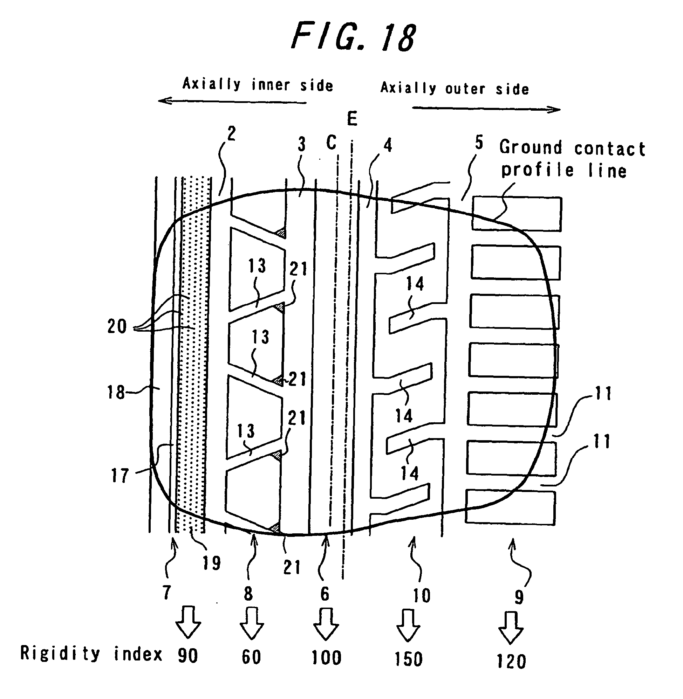

FIG. 18 is a view showing the above case by a rigidity index, in which the rigidity indexes of the land part rows are 90, 60, 100, 110 and 120 in order from the shoulder land part row of the axially inner side located at the left side of the figure.

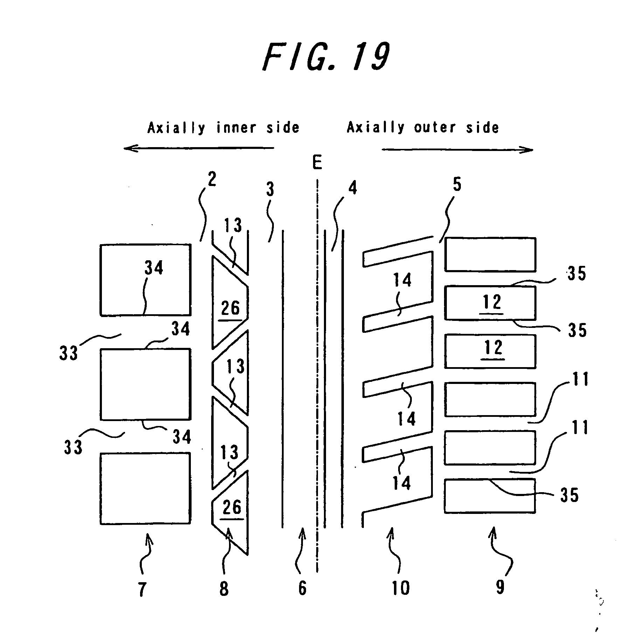

FIG. 19 shows a further embodiment in which a sum of extending components in the widthwise direction of the tread of edges, which may be particularly formed in the shoulder land part row of the axially inner side, edges 34 formed by the lateral grooves 33 in the shoulder land part 7 in the figure is made smaller than a sum of extending components in the widthwise direction of the tread of edges 35 formed by the lateral grooves 11 in the shoulder land part row 9 of the axially outer side and at the same time a plurality of slant grooves 13 extending at an average angle of not less than 45° with respect to the widthwise direction of the tread and opening to at least the circumferential groove 1 are formed in the second inner land part row 8.

In the embodiment of this figure, all of the lateral grooves 14 formed in the second outer land part row 10 are opened to only the circumferential groove 5 at the side of the tread end and the other ends thereof are terminated in the land part row.

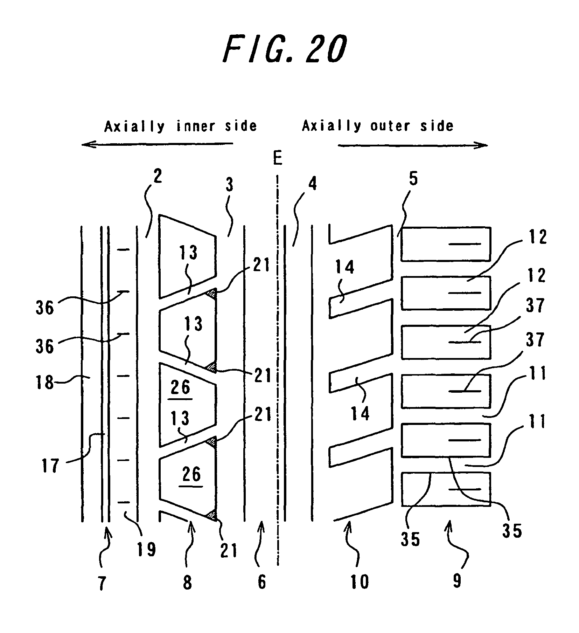

FIG. 20 shows a modified example of the above case, in which sipes 36 are formed in the wide-width rib 19 divided by the fine groove 17 in the shoulder land part row 7 of the axially inner side instead of the above lateral grooves 23 to form edges with these sipes 36, while sipes 37 are formed in the shoulder land part row 9 of the axially outer side in addition to the lateral grooves 11 to form edges with these sipes and grooves.

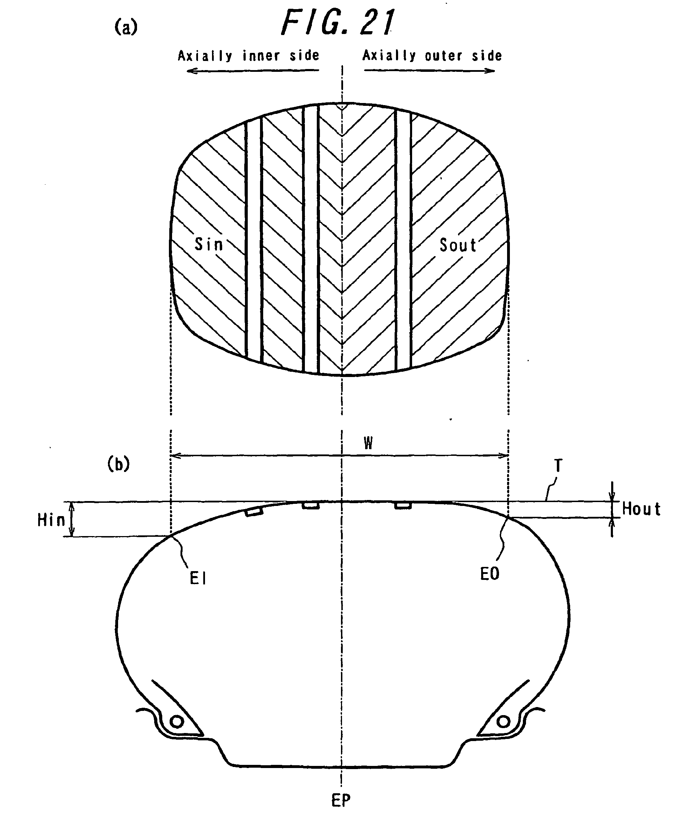

In the asymmetrical pattern tires as mentioned above, in order to suppress the occurrence of conicity force directing to a direction of the axially outer side when an effective ground contact area Sₒᵤₜ of the outer side mounting portion shown by oblique lines in the figure is made larger than an effective ground contact area Sᵢₙ of the inner side mounting portion by differing the negative ratio between the inner side mounting portion and the outer side mounting portion in the tread ground contact face under a condition that the tire is mounted onto an approved rim and inflated under a defined air pressure and loaded under a mass corresponding to a maximum load capacity as the tread ground contact face is schematically shown in FIG. 21(a), the tire is effective to be constituted by selecting an inner surface form of a vulcanization mold or the like so that radial distances Hᵢₙ, Hₒᵤₜ from tangential line T on an outer surface of the tread perpendicular to an equatorial plane EP of the tire to ground contact edges EI and EO of the tread become large in the axially inner side having a small effective ground contact area (Hᵢₙ > Hₒᵤₜ) as shown by a schematically section view in the widthwise direction of the tire at a state of inflating under a normal air pressure in FIG. 21(b).

This is true in case of setting the magnitude relation of the effective ground contact area opposite to the above. In the latter case, the tire is constituted in such a manner that the radial distances Hᵢₙ, Hₒᵤₜ satisfy the relation of Hₒᵤₜ > Hᵢₙ.

In this case, it is more preferable to satisfy a relation of S-large/S-small = A x (H_{(S-small side)}/H_{(S-large side)}) in which A is 1.0-1.4 when a large effective ground contact area is S-large and a small ground contact area is S-small and a radial distance at a side of large effective ground contact area is H_{(S-large side)} and a radial distance at a small side is H_{(S-small side)}.

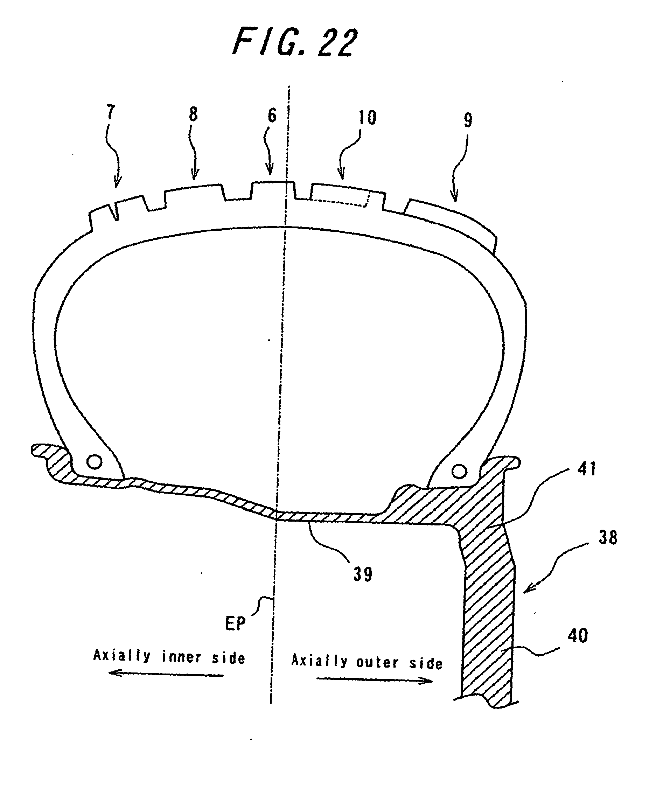

FIG. 22 is a section view of a main part illustrating an embodiment of the tire-wheel assembly according to the invention.

In case of mounting the aforementioned tire in which the compression rigidity of the shoulder land part row in the axially inner side is small onto a wheel, a connection part 41 between a rim 39 and a disc 40 in a wheel 38 is located at an outer side of a vehicle to be mounted with respect to the equatorial plane EP of the tire.

According to this embodiment, the transmission of vibrations from the tire to an axle can be advantageously controlled based on the lowering of the compression rigidity of the shoulder land part row of the axially inner side.

### [Example 1]

Each of example tires and comparative example tires having a tire size of 225/55 R16 is assembled onto a rim of 7.0J-16 and filled under an air pressure of 210 kPa and mounted onto a vehicle. The vehicle is actually run at a state of two crewmen riding under a condition that a negative camber of a front wheel is 0.3° and a negative camber of a rear wheel is 0.5°, during which a wear ratio of shoulder land part rows, a speed generating a hydroplaning phenomenon, a vehicle interior noise and a steering stability on a dry road surface are measured.

Example tire 1 has a tread pattern shown in FIG. 1, in which a slant groove in a second inner land part row has an angle of 45° with respect to a widthwise direction of a tread and an extending angle of a lateral groove in a second outer land part row is 30° and an average extending angle of a lateral groove in a shoulder land part row of an axially outer side is 15°.

Example tire 2 has a tread pattern shown in FIG. 2, in which an angle of each groove is the same as in Example tire 1.

Example tire 3 has a tread pattern shown in FIG. 12 in which an extending angle of a slant groove in a second inner land part row is 50° and an angle of a lateral groove in a second outer land part row is 30° and an angle of a lateral groove in a shoulder land part row of an axially outer side is 0°.

Example tire 4 has a tread pattern shown in FIG. 1 in which the groove angle is the same as in Example tire 1 and a peripheral upheaved portion as shown in FIG. 11 is provided on a block in a shoulder land part row of an axially outer side.

Example tire 5 has a tread pattern shown in FIG. 12 in which the groove angle is the same as in Example tire 3 and a high height portion of an extending embodiment shown in FIG. 13(a) is provided on a block in a second inner land part row.

Example tire 6 has a tread pattern shown in FIG. 14 in which an average angle of a slant groove in a second inner land part row is 60° and an angle of a lateral groove in a second outer land part row is 30° and an angle of a groove in a shoulder land part row of an axially outer side is 0°.

Example tire 7 has a tread pattern shown in FIG. 15 in which an angle of a slant groove in a second inner land part row is 45° and an angle of a lateral groove in a second outer land part row is 30° and an angle of a groove in a shoulder land part row of an axially outer side is 0°.

Example tire 8 has a tread pattern shown in FIG. 16 in which an average angle of a slant groove in a second inner land part row is 60° and a depth of the slant groove is changed from 2.0 mm to 6.5 mm and an angle of a lateral groove in a second outer land part row is 30° and an angle of a lateral groove in a shoulder land part row of an axially outer side is 0°.

Example tire 9 has a tread pattern shown in FIG. 17 in which an angle of a slant groove in a second inner land part row is ± 50° and an average angle of a lateral groove in a second outer land part row is 30° and an angle of a lateral groove in a shoulder land part row of an axially outer side is 0°.

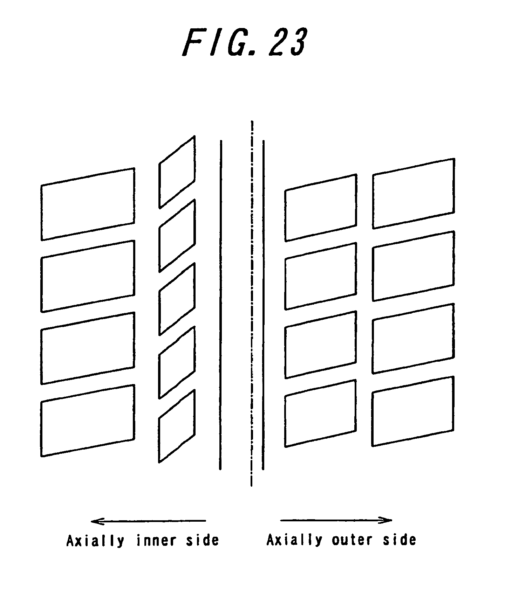

Comparative Example tire 1 has a tread pattern shown in FIG. 23 in which an angle of a lateral groove in a shoulder land part row of an axially inner side is 10° and an angle of a slant groove in a second land part row is 50° and an angle of a lateral groove in a second outer land part row is 30° and an angle of a lateral groove in a shoulder land part row of an axially outer side is 10°.

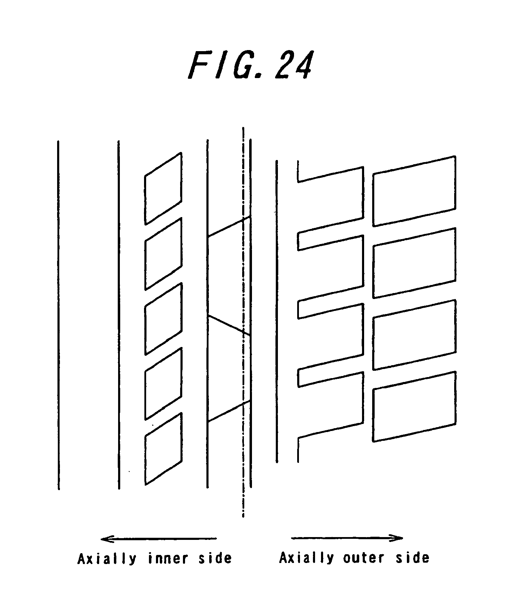

Comparative Example tire 2 has a tread pattern shown in FIG. 24 in which an angle of a slant groove in a second inner land part row is 40° and an angle of a lateral groove in a second outer land part row is 30° and an angle of a lateral groove in a shoulder land part row of an axially outer side is 17°.

### Test Method

### Wear ratio

After the running over 2000 km at a ratio of express way, general-purpose road and mountain path of 50%, 40% and 10%, worn amounts of widthwise central portions of both shoulder land part rows are measured, from which a ratio of both is determined for evaluation. A case that the axially inner side is largely worn is shown by a numerical value of not more than 1, while a case that the axially outer side is largely worn is shown by a numerical value of not less than 1. Moreover, a preferable range of the wear ratio is 1.0-1.2.

### Speed generating hydroplaning phenomenon

The speed generating the hydroplaning phenomenon is evaluated by a test driver when an acceleration test is carried out from a speed of 50 km/h in a pool having a water depth of 6 mm. The result is represented by an index of an average speed generating hydroplaning phenomenon on left and right wheels and is better as the index value becomes large. Vehicle interior noise

A noise level is measured on a microphone placed at a side of a central part of the vehicle about a driver's ear during the running at a constant speed of 60 km/h on a smooth road surface of a test circuit course. The noise is represented by an index in which the larger the index value, the lower the noise. Steering stability

It is evaluated by a driver's feeling during the running on a dry road surface of a test circuit course. The result is represented by an index, in which the larger the index value, the better the result.

These test results are shown in Table 1.

**Table 1**

| | Figure | Wear ratio | Speed generating hydroplaning | Noise | Steering stability |
|---|---|---|---|---|---|
| Comparative Example tire 1 | FIG. 23 | 0.9 | 110 | 100 | 100 |
| Comparative Example tire 2 | FIG. 24 | 1.0 | 100 | 110 | 90 |
| Example tire 1 | FIG. 1 | 1.0 | 110 | 101 | 110 |
| Example tire 2 | FIG. 2 | 1.0 | 105 | 110 | 110 |
| Example tire 3 | FIG. 12 | 1.1 | 115 | 110 | 120 |
| Example tire 4 | FIG. 1 + FIG. 11 | 1.0 | 110 | 101 | 125 |
| Example tire 5 | FIG. 12 + FIG. 13(a) | 1.1 | 115 | 125 | 120 |
| Example tire 6 | FIG. 14 | 1.05 | 120 | 110 | 125 |
| Example tire 7 | FIG. 15 | 1.1 | 112 | 115 | 110 |
| Example tire 8 | FIG. 16 | 1.1 | 115 | 113 | 125 |
| Example tire 9 | FIG. 17 | 1.05 | 125 | 105 | 110 |

As seen from Table 1, in the example tires, the excellent resistance to uneven wear can be ensured while effectively attaining the improvement of the resistance to hydroplaning, the reduction of the vehicle interior noise and the improvement of the steering stability.

### [Example 2]

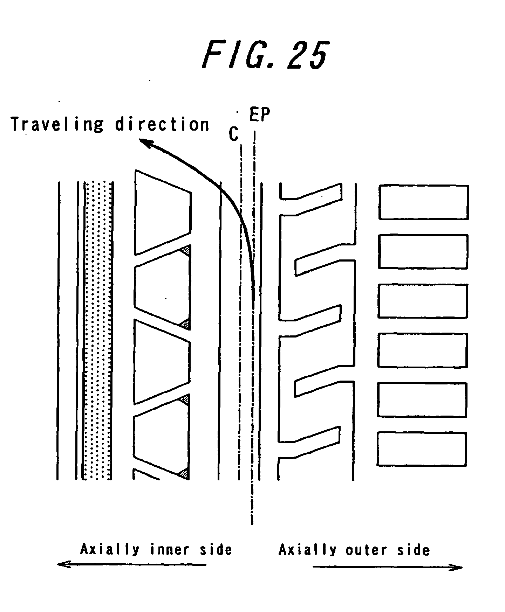

Each of example tires and comparative example tires having a tire size of 215/45 R17 and a tread pattern shown in FIG. 25 is assembled onto a rim of 7.5J x 17 and filled with an internal pressure of 220 kPa, and a camber angle of -0.5° is applied to make a ground contact length of an axially inner side long, and thereafter a slip angle is changed from 0 degree to 5 degrees at a speed of 30 km/h to measure a cornering force generated.

When a difference of cornering force between 0 degree and 1 degree is Cf1 and a difference of cornering force between 0 degree and 2.5 degrees is Cf2 and a difference between 0 degree and 5 degrees is Cf3, if Cf2/Cf1 is 2.5 and Cf3/Cf1 is 5, the cornering force is linearly generated, while if Cf2/Cf1 is larger than 2.5, the cornering force increases non-linearly at a position having a large slip angle, and if Cf2/Cf1 is smaller than 3, the cornering force decreases non-linearly.

In these tires, an integral value of rigidities of the land part rows shown in FIG. 25 in the widthwise direction of the tread is represented by an index in Table 2, and a ratio of cornering forces measured is shown in Table 3.

Moreover, the index value in Table 2 shows that the value is large as the rigidity becomes high.

**Table 2**

| | Inner shoulder | Second inner stretching side | Vicinity of central portion | Second outer contracting side | Outer shoulder |
|---|---|---|---|---|---|
| Comparative Example tire 3 | 210 | 100 | 100 | 100 | 210 |
| Comparative Example tire 4 | 180 | 100 | 100 | 210 | 450 |
| Comparative Example tire 5 | 50 | 80 | 100 | 110 | 50 |
| Example tire 10 | 100 | 100 | 100 | 100 | 100 |
| Example tire 11 | 180 | 100 | 100 | 100 | 80 |
| Example tire 12 | 80 | 50 | 100 | 100 | 100 |

**Table 3**

| | Cf2/Cf1 | Cf3/Cf1 |
|---|---|---|
| Comparative Example tire 3 | 2.5 | 5.5 |
| Comparative Example tire 4 | 3.0 | 5.8 |
| Comparative Example tire 5 | 2.5 | 4.5 |
| Example tire 10 | 2.5 | 5.0 |
| Example tire 11 | 2.5 | 5.1 |
| Example tire 12 | 2.6 | 5.0 |

As seen from Table 3, all of Example tires 10-12 can increase the cornering force substantially linearly, while the cornering force becomes non-linear at a position having a large slip angle in Comparative Example tires 3 and 5 and at a position having a small slip angle in Comparative Example tire 4.

### [Example 3]

Each of example tires and comparative example tires having a tire size of 235/45 R17 is assembled onto a rim of 8J x 17 under an internal pressure of 210 kPa and mounted onto a vehicle in which a camber angle at a front wheel is -0.4° and that at a rear wheel is -0.6° at a state of two crewmen riding.
Ⓞ This vehicle is subjected to a wearing test. The test condition is that it is run on an expressway, a general purpose road and a mountain path at a ratio of 50%, 40% and 10% over 20000 km. After the running, a ratio of worn amounts of widthwise central portions of both shoulder land part rows in two front wheels is measured. A case that the ratio is larger than 100 shows that the axially inner side is largely worn, and a case that the ratio is smaller than 100 shows that the axially outer side is largely worn.
Ⓞ The vehicle is subjected to an acceleration test from a speed of 50 km/h in a pool having a water depth of 6 mm to thereby evaluate a speed generating hydroplaning by a test driver. The result is represented by an index of an average speed generating hydroplaning phenomenon on left and right wheels and is better as the index value becomes large.
Ⓞ A noise is measured in the vehicle on a smooth road surface of a test circuit course. It is measured by a microphone placed at a central portion of the vehicle about a driver's ear during the running at a constant speed of 60 km/h. The noise is represented by an index, in which the larger the index value, the lower the noise.

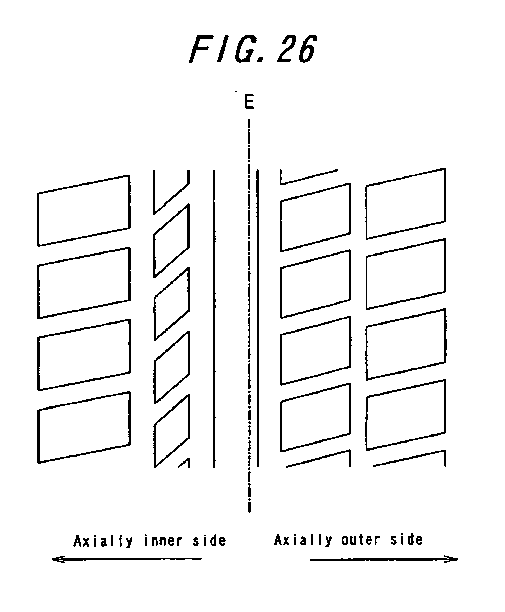

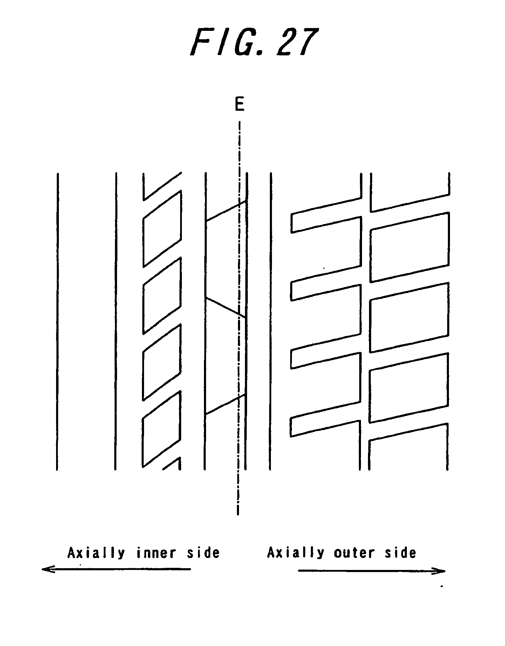

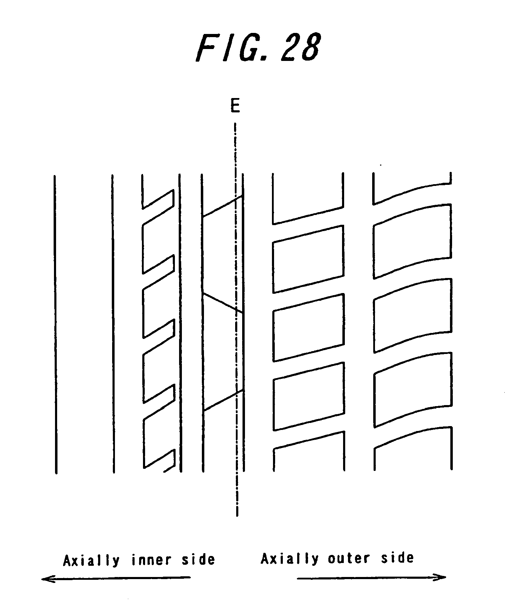

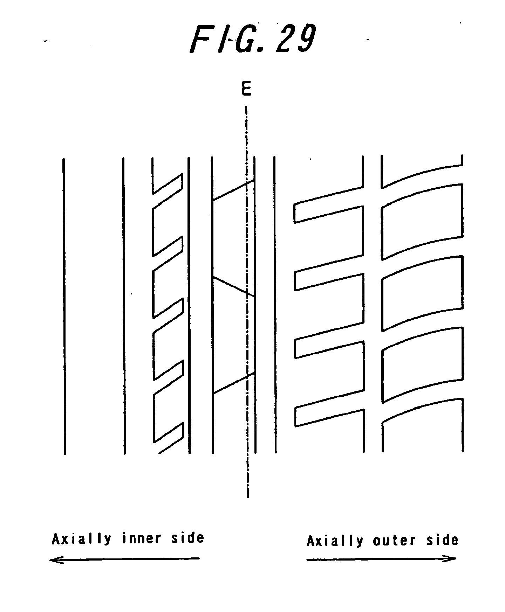

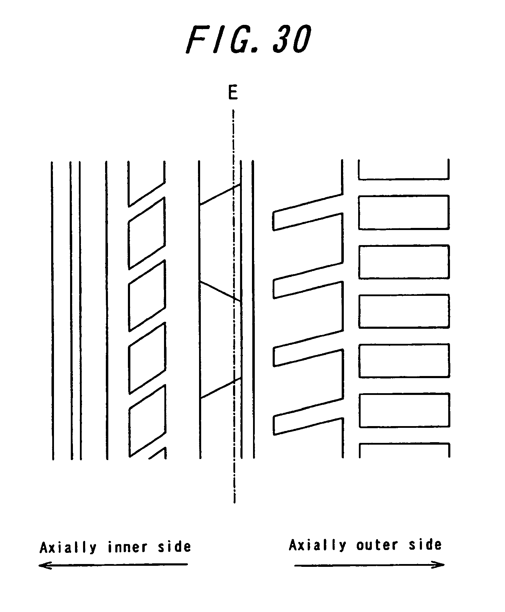

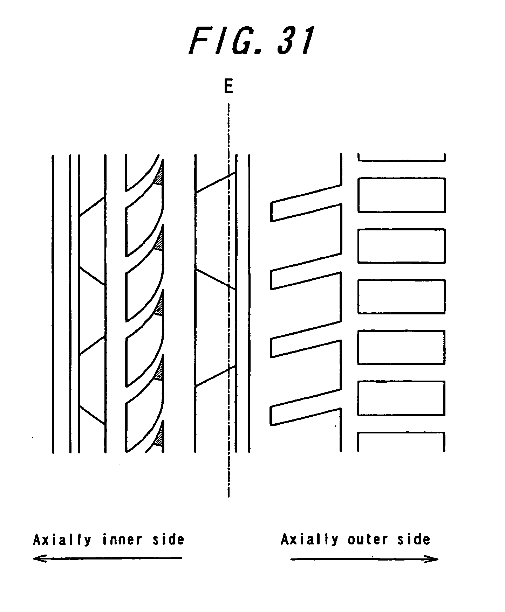

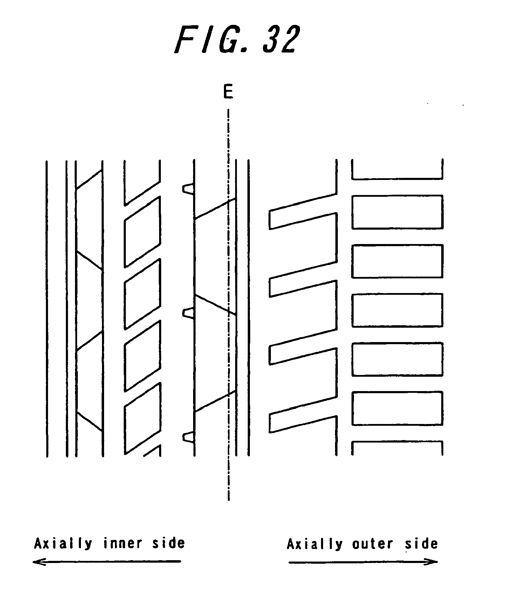

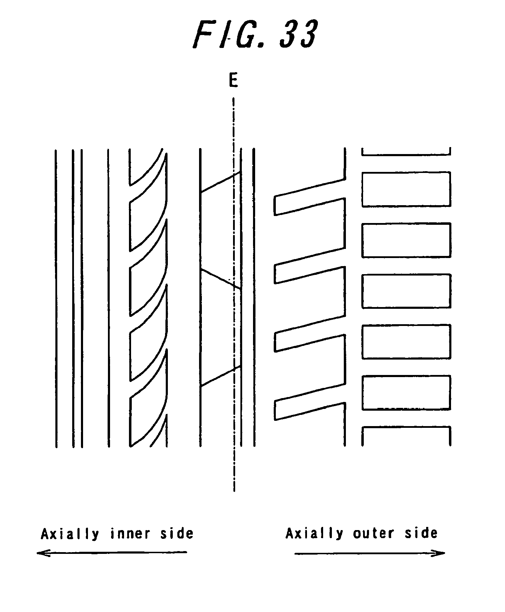

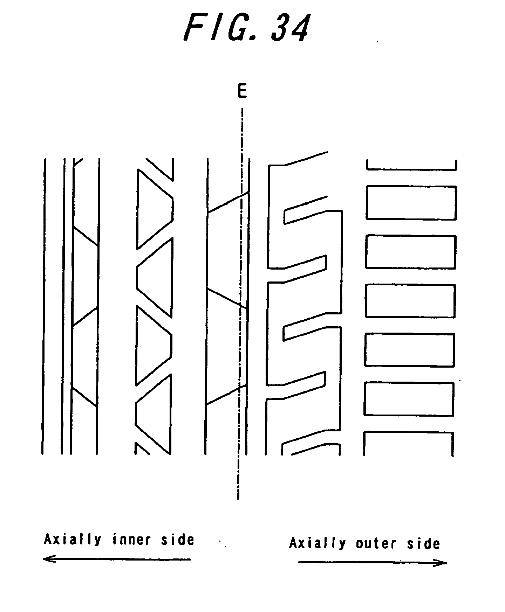

These test results are shown in Table 4.
○ Comparative Example tire 6: has a tread pattern shown in FIG. 26 wherein lateral grooves having an angle of 12° with respect to the widthwise direction are formed in a shoulder land part row of an axially inner side and slant grooves having an angle of 55° are formed in a second inner land part row, and a central region is a rib, and lateral grooves having an angle of 35° are formed in a second outer land part and lateral grooves having an angle of 12° are formed in an outer shoulder land part row.
○ Comparative Example tire 7: has a tread pattern shown in FIG. 27 wherein a shoulder land part row of an axially inner side is a rib and slant grooves having an angle of 42° are formed in a second inner land part, and sipes are formed in a rib of a central region, and lateral grooves extending at an angle of 32° and opening to only an axially outer side are formed in a second outer land part row and lateral grooves having an angle of 32° are formed in a shoulder land part row of the axially outer side.
○ Example tire 13: has a tread pattern shown in FIG. 28 wherein a shoulder land part row of an axially inner side is a rib and slant grooves having an angle of 42° are formed in a second inner land part, and sipes are formed in a rib of a central region, and lateral grooves having an angle of 32° are formed in a second outer land part row and lateral grooves curving convexly upward and having an average angle of 12° are formed in a shoulder land part row of an axially outer side.
○ Example tire 14: has a tread pattern shown in FIG. 29, which is different from the example tire 13 in only a point that the lateral groove in the second outer land part row is opened only to the axially outer side.
○ Example tire 15: has a tread pattern shown in FIG. 30 wherein a shoulder land part of an axially inner side is divided into two parts and slant grooves having an angle of 55° are formed in a second inner land part row, and a sipes are formed in a rib of a central region, and lateral grooves having an angle of 32° and formed in a second outer land part row are opened only to an axially outer side and lateral grooves having an angle of 5° are formed in a shoulder land part row of the axially outer side.
○ Example tire 16: has a tread pattern shown in FIG. 28, which is different from the example tire 13 in points that an angle of the slant groove formed in the second inner land part row is 45° and a peripheral upheaved portion shown in FIG. 11 is provided on a block of the outer shoulder land part row.
○ Example tire 17: has a tread pattern shown in FIG. 30, which is different from the example tire 15 in a point that heights of leading edge and trailing edge in a land part of each of the second inner land part row and the second outer land part row differ in the widthwise direction of the tread and each of high height portions is extended linearly in a circumferential direction of the tread while changing positions in the widthwise direction of the tread in accordance with the circumferential positions and continued in the circumferential direction.
○ Example tire 18: has a tread pattern shown in FIG. 31, which is the same as Example 15 except points that sipes are formed in a wide-width rib of a shoulder land part of the axially inner side and the slant groove formed in the second inner land part row is a downward convex curve at an average extending angle of 60° and a slant face gradually decreasing a height toward a top end side is formed in an acute corner part of a block defined by the slant grooves.
○ Example tire 19: has a tread pattern shown in FIG. 32, which is the same as in FIG. 31 except that projection parts are arranged on a side wall of a central region rib in correspondence with positions of slant grooves of 45° formed in a second inner land part row and opening to the side of the central region rib and at a pitch corresponding to two openings.
○ Example tire 20: has a tread pattern shown in FIG. 33, which is the same as in FIG. 30 (Example tire 15) except that a slant groove formed in the second inner land part row is a downward convex curve at an average extending angle of 60° and a depth of the slant groove is 2 mm at an end of a tread center side and is gradually deepened toward a side of a tread end and is 6.5 mm at an opening end to the circumferential main groove located at the shoulder side.
○ Example tire 21: has a tread pattern shown in FIG. 34, wherein sipes are formed in a wide-width rib divided in a shoulder land part row of an axially inner side and slant grooves are formed in a second inner land part row at an angle of 50° and the extending directions thereof are alternately opposed to each other in the circumferential direction, and sipes are formed in a central region rib, and one end of a lateral groove formed in a second outer land part row is alternately opened to the adjoining circumferential grooves in the circumferential direction and the other end thereof is terminated in the land part row, and an angle of a lateral groove formed in an outer shoulder land part row is 5°.

**Table 4**

| | Figure | Wear ratio | Resistance to hydroplaning | Silentness | Steering stability |
|---|---|---|---|---|---|
| Comparative Example tire 6 | FIG. 26 | 115 | 100 | 100 | 100 |
| Comparative Example tire 7 | FIG.27 | 92 | 90 | 100 | 95 |
| Example tire 13 | FIG. 28 | 97 | 105 | 101 | 105 |
| Example tire 14 | FIG. 29 | 97 | 105 | 105 | 105 |
| Example tire 15 | FIG. 30 | 100 | 110 | 105 | 110 |
| Example tire 16 | FIG. 28 + FIG. 11 | 97 | 105 | 101 | 112 |
| Example tire 17 | FIG. 30 + FIG. 13(a) | 100 | 110 | 112 | 110 |
| Example tire 18 | FIG. 31 | 99 | 112 | 105 | 125 |
| Example tire 19 | FIG. 32 | 98 | 107 | 103 | 105 |
| Example tire 20 | FIG. 33 | 98 | 110 | 103 | 125 |
| Example tire 21 | FIG. 34 | 100 | 113 | 103 | 105 |

### [Example 4]

PSR 205/65R15, rim: 6JJ x 15, internal pressure: 200 kPa, two load levels of 0.588 kN and 0.235 kN.

There are carried out indoor wear test on a shoulder land part row of an axially inner side at a camber of 0.5 degree and an indoor test of generating a hydroplaning phenomenon.

Also, the number of foreign matters such as stones or the like bitten in fine grooves formed in the shoulder land part row of the axially inner side is measured after the running of a vehicle on general-purpose road over 1000 km.

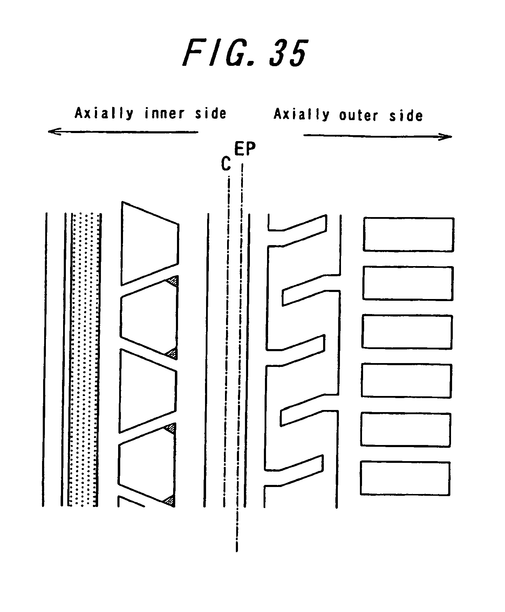

Comparative Example tire 8: A pattern is similar to that of FIG. 35, wherein a center line of a rib in a central region is coincident with an equatorial line of the tire, and small holes are not formed in a shoulder land part row of an axially inner side, and a width of a fine groove in a circumferential direction of the shoulder is substantially constant in a depth direction, and lateral grooves extending at an angle of 5° in the widthwise direction are formed in a shoulder land part row of an axially outer side.

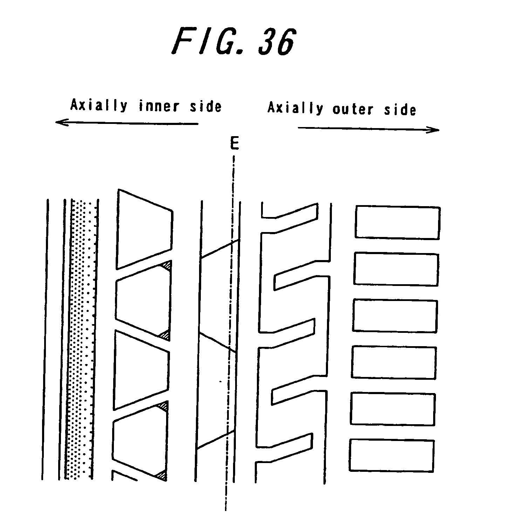

Moreover, this tire is included in the invention of claim 1. Example tire 22: has a pattern shown in FIG. 36, wherein small holes formed in a shoulder land part row of an axially inner side are dense at a shoulder side and rough at a center side as shown in FIG. 4, and three-dimensional sipes of three-divided type shown in FIG. 8(b) are formed in a central land part row, and a width of a circumferential fine groove in a shoulder is gradually decreased from a surface toward bottom so as to be 3 mm at a surface of a new tire tread and 0.5 mm at a groove bottom.

The performance is represented by an index in Table 5 using the comparative example tire 8 as a control, in which the larger the index value, the better the result.

**Table 5**

| | Figure | Wear (load: 0.588 kN) | Wear (load: 0.235 kN) | Hydroplaning | Number of foreign matters |
|---|---|---|---|---|---|
| Comparative Example tire 8 | FIG. 35 | 100 | 100 | 100 | 100 |
| Example tire 22 | FIG. 36 | 110 | 108 | 110 | 670 |

### [Example 5]

After each of example tires and comparative example tire having a tire size of 215/45 R17 is assembled onto a standard rim and adjusted to 220 kPa, the resistance to hydroplaning and steering stability in straight running on a test circuit course are evaluated by feeling and the worn amount of a tread center portion is measured by running the vehicle over 20000 km as to center wearing. The results are shown in Table 6 using a comparative example tire 11 as a control.

### • Comparative Example tire 9

It has a tread pattern shown in FIG. 35 wherein a central region land part row is a rib having a width of 18 mm.

Moreover, this tire is included in the invention of claim 1 as previously mentioned.

### • Example tire 23

In a tread pattern shown in FIG. 35, a plurality of sipes extending at an angle of 15° with respect to a widthwise direction of the tire in the same direction are formed in a central region rib at intervals of 30 mm in the circumferential direction over a full width of the rib and a depth of the sipe is 10 mm and an opening width thereof is 0.4 mm, and each of the sipes is divided into three parts as shown in FIG. 8(b) and inclined at an angle of ±22.5° with respect to a radial direction of the tire in a depth direction.

### • Example tire 24

In a tread pattern shown in FIG. 35, a plurality of ellipsoidal recesses inclined in the circumferential direction are formed in a central region rib at intervals of 30 mm in the circumferential direction, and a length of a major axis of the recess is 13 mm and an inclination angle of the major axis with respect to the widthwise direction of the tire is 15° and a length of a minor axis thereof is 3 mm.

### Table 6

**Table 6**

| | Figure | Steering stability | Resistance to hydroplaning | Center wear |
|---|---|---|---|---|
| Comparative Example tire 9 | FIG. 35 | 100 | 100 | 100 |
| Example tire 23 | FIG. 35 | 105 | 108 | 105 |
| Example tire 24 | FIG. 35 | 102 | 108 | 104 |

### [Example 6]

With respect to each of example tire and comparative example tires having a tire size of 205/66 R15, the conicity force on a tire-wheel assembly is measured and the steering stability and resistance to hydroplaning are measured to obtain results as shown in Table 7.

In this table, Example tire 25 has a tread pattern shown in FIG. 12, wherein circumferential main grooves having a depth of 8 mm are asymmetrically arranged in axially inner side and outer side to be mounted, and a ratio of effective ground contact area Sₒᵤₜ at the axially outer side to ground contact area Sᵢₙ at the axially inner side bordering the equatorial line E of the tire is 1.14, and a radial distance from a tangential line T on an outer side surface of the tread at a position corresponding to 80% of a tread width W is 5.8 mm at the axially outer side and 6.2 mm at the axially inner side.

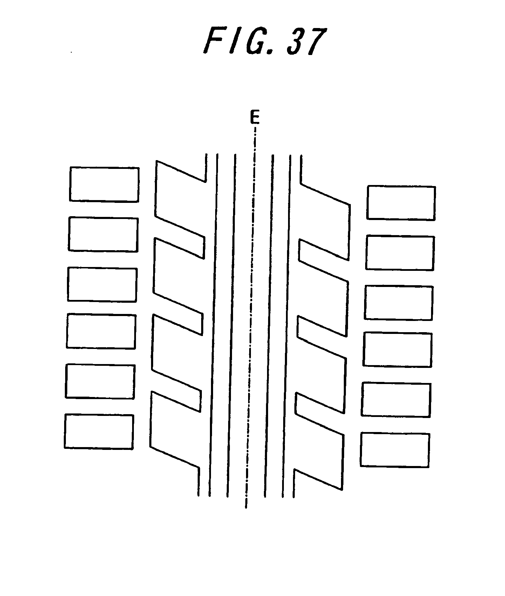

Comparative Example tire 10 has a symmetrical tread pattern shown in FIG. 37, wherein circumferential main grooves having a depth of 8 mm are symmetrically arranged with respect to the equatorial line of the tire to substantially equalize the effective ground contact area at the axially inner side and axially outer side, and the radial distance from a tangential line T on an outer side surface of the tread at a position corresponding to 80% of a tread width W is made substantially equal at the axially inner side and axially outer side.

The steering stability is evaluated by feeling in the running on a test circuit course, and the resistance to hydroplaning is evaluated by feeling in the running on a straight road surface having a water depth of 6 mm. Moreover, the larger the index value in the table as to these performances, the better the result.

Also, the conicity force is determined by an average of found values on 10 tires of each example.

### Table 7

**Table 7**

| | Figure | Steering stability | Resistance to hydroplaning | Conicity force (N) |
|---|---|---|---|---|
| Example tire 25 | FIG. 12 | 105 | 108 | 20 |
| Comparative 10 Example tire 10 | FIG.37 | 100 | 100 | 18 |
| Comparative 11 Example tire 11 | FIG. 12 | 108 | 108 | 86 |

As seen from Table 7, the example tire produces high steering stability and resistance to hydroplaning and can control the conicity force to the same extend as in the symmetrical pattern of Comparative example tire 10.

### [INDUSTRIAL APPLICABILITY OF THE INVENTION]

As seen from the above, according to the invention, the resistance to hydroplaning and steering stability are improved and the noise in the rotation of the tire can be advantageously reduced without lowering the resistance to uneven wear.

## Claims

1. A pneumatic tire comprising three or more circumferential main grooves (2, 3, 4, 5) asymmetrically positioned with respect to an equatorial line (E) of the tire and extending linearly and continuously in the circumferential direction of the tread formed in a ground contact face (1) of the tread to form one or more land part rows (6, 7, 8, 9) in each of the resulting central region and both side regions, in which
a plurality of slant grooves (13) are arranged in a second inner land part row (8) located at a side of the equatorial line (E) adjacent to a shoulder land part row (7) at the axially inner side and
these slant grooves (13) are opened to the circumferential main groove (2) at least located adjacent to the second inner land part row (8) of the axially inner side,
**characterized in that**
a sum of groove volume in a circumferential direction in lateral grooves formed in a shoulder land part row (7) corresponding to an axially inner side of the tire mounted on a vehicle per unit width is made smaller than a sum of groove volume in the circumferential direction in lateral grooves (11) formed in a shoulder land part row (9) corresponding to an axially outer side of the tire mounted on the vehicle, and
the land part row (6) in the central region is rendered into a rib, and
the slat grooves (13) extending at an average inclination angle of not less than 45° with respect to a widthwise direction of the tread.

2. A pneumatic tire according to claim 1, wherein the number of the circumferential main grooves (2, 3, 4, 5) is 4 or more, and
a plurality of lateral grooves (14) opening at either one end to the circumferential main groove (4, 5) and terminating at the other end in the land part row are formed in a second outer land part row (10) located adjacent to the side of the equatorial line (E) of the tire in the shoulder land part row (9) of the axially outer side.

3. A pneumatic tire according to claim 1 or 2, wherein the shoulder land part row (7) of the axially inner side is divided into two parts by a fine groove (17) extending in a circumferential direction, and an average angle of the lateral groove (11) formed in the shoulder land part row (9) of the axially outer side with respect to the widthwise direction of the tread is not more than 15°.

4. A pneumatic tire according to any one of claims 1 to 3, wherein the shoulder land part row (7) of the axially inner side is divided into two parts by a fine groove (17) extending in a circumferential direction, and one divided portion located at a side of a tread end is a narrow-width rib (18) and a plurality of small holes (20) separated from the groove (17) are formed in the other wide-width divided portion (19), which may be provided with lateral grooves.

5. A pneumatic tire according to claim 3 or 4, wherein a groove width of the fine groove (17) is made wider in a side of a tread surface than in a groove bottom.

6. A pneumatic tire according to claim 4 or 5, wherein a total volume of plural small holes (20) formed in the wide-width divided part (19) at the shoulder land part row (7) of the axially inner side in the circumferential direction of the tread is made larger at a side of the fine groove (17) than at a side of the equatorial line (E) of the tire.

7. A pneumatic tire according to any one of claims 4 to 6, wherein the wide-width divided portion having small holes (20) is contacted in at least a part of the small hole forming region with ground at a posture of applying a camber angle of -0.5 under an action of a load corresponding to 40% of a maximum load capacity.

8. A pneumatic tire according to any one of claims 4 to 7, wherein a side wall of the narrow-width rib (18) located at a side of a tread end is a curved form having at least one center of curvature at an outer side of a cross sectional profile line.

9. A pneumatic tire according to any one of claims 1 to 8, wherein a center line (C) of a rib of the central region land part row (6) located nearest to the side of the equatorial line (E) of the tire is biased to the axially inner side with respect to the equatorial line (E) of the tire, and a plurality of widthwise fine grooves (22) extending obliquely with respect to the widthwise direction of the tread are formed in this rib.

10. A pneumatic tire according to claim 9, wherein an inclination angle of the widthwise fine groove (22) is an average angle within a range of 5-55°.

11. A pneumatic tire according to claim 9 or 10, wherein the widthwise fine groove (22) is formed so as to incline in a depth direction in form of a curved face provided that it is separated away from each other bordering a middle part of its extending direction.

12. A pneumatic tire according to any one of claims 9 to 11, wherein at least a part of the widthwise fine grooves (22) is terminated at both ends in the rib.

13. A pneumatic tire according to any one of claims 1 to 8, wherein a center line (C) of a rib of the central region land part row (6) located nearest to the side of the equatorial line (E) of the tire is biased to the axially inner side with respect to the equatorial line (E) of the tire, and a plurality of recesses (23) having substantially an ellipsoidal form are formed in this rib, and a major axis of each of the recesses (23) is extended at an angle of 5-45° with respect to the widthwise direction of the tread, and a side of the shoulder land part row (8) in the rib at the axially inner side is defined by the circumferential main groove (3) extending linearly.

14. A pneumatic tire according to claim 13, wherein at least a part of the recesses (23) is provided with a sipe(s) (24) extending in a direction of the major axis.

15. A pneumatic tire according to any one of claims 1 to 14, wherein the rib of the central region land part row (6) located nearest to the equatorial line (E) of the tire is defined by a pair of circumferential main grooves (3, 4) extending linearly, and a groove width of the circumferential main groove (3) located at a side of the shoulder land part row (8) of the axially inner side is made wider than a groove width of the circumferential main groove (4) located at a side of the shoulder land part row (10) of the axially outer side.

16. A pneumatic tire according to any one of claims 1 to 15, wherein a peripheral upheaved portion (25) gradually decreasing a surface height toward at least one of a side edge of a block and a central region of a block is formed in each of blocks (12) defined by the lateral grooves (11) in the shoulder land part row (9) of the axially outer side.

17. A pneumatic tire according to any one of claims 1 to 16, wherein a height of a leading edge (26) and a height of a trailing edge (27) in a block defined by the slant grooves (13) in at least a second inner land part row (8) are made different in the widthwise direction of the tread, and each of high height portions is extended in the circumferential direction of the tread while changing positions in the widthwise direction of the tread in accordance with positions in the circumferential direction.

18. A pneumatic tire according to any one of claims 1 to 17, wherein a slant face (29) gradually decreasing a height toward a top is formed in an acute corner portion of a block (26) defined by at least one of the lateral groove (3) and the slant groove (13) extending at an average angle of not less than 45° with respect to the widthwise direction of the tread.

19. A pneumatic tire according to any one of claims 1 to 18, wherein a projection part (32) projecting into a groove is disposed in a groove wall (31) of the circumferential main groove (3) opposite to a groove wall opening to at least one of the lateral groove and the slant groove (13) at a groove opening position and a position opposite to the widthwise direction of the tread.

20. A pneumatic tire according to any one of claims 1 to 19, wherein a groove depth of the slant groove (13) extending at an average angle of not less than 45° with respect to the widthwise direction of the tread is deepened from the side of the equatorial line (E) of the tire toward the side of the tread end.

21. A pneumatic tire according to any one of claims 1 to 20, wherein extending directions of the slant grooves (13) formed in the second inner land part row (8) with respect to the widthwise direction are alternately rendered into opposite directions in the circumferential direction of the tread.

22. A pneumatic tire according to any one of claims 1 to 21, wherein an integral value of the rigidity in the widthwise direction of the tread over a full ground contact length in each of the land part rows (90, 60, 100, 110, 120) defined by the circumferential main grooves (2, 3, 4, 5)is within a range of 50% from a large value between mutually adjacent land part rows.

23. A pneumatic tire according to any one of claims 1 to 22, wherein at a state that the tire is mounted onto an approved rim and inflated under a normal air pressure and loaded under a mass corresponding to the maximum load capacity, an effective ground contact area (Sout, Sin) at either axially inner side or axially outer side is larger than that at the remaining other side, and a radial distance from a tangential line (T) on the outer side surface of the tread perpendicular to the equatorial plane (EP) of the tire up to the ground contact edge of the tread at a posture of filling the normal air pressure is made larger at the mounting side having a small effective ground contact area than at the other mounting side.

24. A pneumatic tire according to claim 23, wherein a relation between a ratio of small and large effective ground contact areas (S-large/S-small) and a ratio of large and small radial distance (H-large/H-small) satisfies S-large/S-small = A x (H-large/H-small) wherein A is 1.0-1.4.

25. A tire-wheel assembly formed by assembling a pneumatic tire as claimed in any one of claims 1 to 24 onto a wheel, in which a connecting portion between a rim (39) and a disc (4)) of the wheel (38) is located toward an outer side of a vehicle to be mounted with respect to the equatorial plane (EP) of the tire.

## Patentansprüche

1. Luftreifen, der aufweist: drei oder mehrere Umfangshauptrillen (2, 3, 4, 5), die asymmetrisch mit Bezugnahme auf eine Äquatorlinie (E) des Reifens positioniert sind und sich linear und kontinuierlich in der Umfangsrichtung der Lauffläche erstrecken, ausgebildet in einer Reifenaufstandsfläche (1) der Lauffläche, um eine oder mehrere Stegteilreihen (6, 7, 8, 9) in jedem des resultierenden mittleren Bereiches und der beiden Seitenbereiche zu bilden, wobei
eine Vielzahl von schrägen Rillen (13) in einer zweiten inneren Stegteilreihe (8) angeordnet ist, die sich auf einer Seite der Äquatorlinie (E) befindet, benachbart zu einer Schulterstegteilreihe (7) auf der axial inneren Seite, und
diese schrägen Rillen (13) zur Umfangshauptrille (2) geöffnet werden, die mindestens benachbart der zweiten inneren Stegteilreihe (8) der axial inneren Seite benachbart ist,
**dadurch gekennzeichnet, dass**
eine Summe des Rillenvolumens in einer Umfangsrichtung in den seitlichen Rillen, die in einer Schulterstegteilreihe (7) entsprechend einer axial inneren Seite des auf ein Fahrzeug montierten Reifens ausgebildet sind, pro Breiteneinheit kleiner errechnet wird als eine Summe des Rillenvolumens in der Umfangsrichtung in den seitlichen Rillen (11), die in einer Schulterstegteilreihe (9) entsprechend einer axial äußeren Seite des auf das Fahrzeug montierten Reifens ausgebildet sind; und
die Stegteilreihe (6) im mittleren Bereich zu einer Rippe ausgebildet wird; und sich die schrägen Rillen (13) unter einem mittleren Neigungswinkel von nicht weniger als 45° mit Bezugnahme auf eine Breitenrichtung der Lauffläche erstrecken.

2. Luftreifen nach Anspruch 1, bei dem die Anzahl der Umfangshauptrillen (2, 3, 4, 5) vier oder mehr beträgt und
eine Vielzahl von seitlichen Rillen (14), die sich an einem von beiden Enden zur Umfangshauptrille (4, 5) öffnen und am anderen Ende in der Stegteilreihe enden, in einer zweiten äußeren Stegteilreihe (10) gebildet werden, die benachbart der Seite der Äquatorlinie (E) des Reifens in der Schulterstegteilreihe (9) der axial äußeren Seite angeordnet ist.

3. Luftreifen nach Anspruch 1 oder 2, bei dem die Schulterstegteilreihe (7) der axial inneren Seite in zwei Teile durch eine feine Rille (17) unterteilt wird, die sich in einer Umfangsrichtung erstreckt, und bei dem ein mittlerer Winkel der seitlichen Rille (11), die in der Schulterstegteilreihe (9) der axial äußeren Seite gebildet wird, mit Bezugnahme auf die Breitenrichtung der Lauffläche nicht mehr als 15° beträgt.

4. Luftreifen nach einem der Ansprüche 1 bis 3, bei dem die Schulterstegteilreihe (7) der axial inneren Seite in zwei Teile durch eine feine Rille (17) unterteilt wird, die sich in einer Umfangsrichtung erstreckt, und wobei ein Teilabschnitt, der sich auf einer Seite des Laufflächenendes befindet, eine Rippe (18) mit schmaler Breite ist, und wobei eine Vielzahl von kleinen Löchern (20), die von der Rille (17) getrennt sind, im anderen Teilabschnitt (19) mit großer Breite ausgebildet sind, der mit seitlichen Rillen versehen sein kann.

5. Luftreifen nach Anspruch 3 oder 4, bei dem eine Rillenbreite der feinen Rille (17) in einer Seite einer Lauffläche breiter ausgebildet ist als in einem Rillenboden.

6. Luftreifen nach einem der Ansprüche 4 bis 5, bei dem ein Gesamtvolumen mehrerer kleiner Löcher (20), die im Teilabschnitt (19) mit großer Breite an der Schulterstegteilreihe (7) der axial inneren Seite in der Umfangsrichtung der Lauffläche ausgebildet sind, an einer Seite der Rille (17) größer gemacht wird als an einer Seite der Äquatorlinie (E) des Reifens.

7. Luftreifen nach einem der Ansprüche 4 bis 6, bei dem der Teilabschnitt mit großer Breite, der kleine Löcher (20) aufweist, den Boden in mindestens einem Teil des Bereiches mit den ausgebildeten kleinen Löchern in einer Situation der Anwendung eines Radsturzwinkels von -0,5° unter der Wirkung einer Belastung berührt, die 40 % der maximalen Belastbarkeit entspricht.

8. Luftreifen nach einem der Ansprüche 4 bis 7, bei dem eine Seitenwand der Rippe (18) mit schmaler Breite, die auf einer Seite eines Laufflächenendes angeordnet ist, eine gebogene Form mit mindestens einem Krümmungsmittelpunkt an einer äußeren Seite einer Querschnittsprofillinie aufweist.

9. Luftreifen nach einem der Ansprüche 1 bis 8, bei dem eine Mittellinie (C) einer Rippe der Stegteilreihe (6) des mittleren Bereiches, die der Seite der Äquatorlinie (E) des Reifens am nächsten gelegen ist, zu einer axial inneren Seite mit Bezugnahme auf die Äquatorlinie (E) des Reifens vorgespannt wird, und bei dem eine Vielzahl von feinen Rillen (22) in der Breitenrichtung, die sich mit Bezugnahme auf die Breitenrichtung der Lauffläche schräg erstrecken, in dieser Rippe ausgebildet ist.

10. Luftreifen nach Anspruch 9, bei dem ein Neigungswinkel der feinen Rille (22) in der Breitenrichtung ein mittlerer Winkel innerhalb eines Bereiches von 5-55° ist.

11. Luftreifen nach Anspruch 9 oder 10, bei dem die feine Rille (22) in der Breitenrichtung so ausgebildet ist, dass sie sich in einer Tiefenrichtung in der Form einer gebogenen Fläche neigt, vorausgesetzt, dass sie voneinander weg getrennt ist, wobei ein mittlerer Teil der Richtung begrenzt wird, in der sie sich erstreckt.

12. Luftreifen nach einem der Ansprüche 9 bis 11, bei dem mindestens ein Teil der feinen Rillen (22) in der Breitenrichtung an beiden Enden in der Rippe begrenzt wird.

13. Luftreifen nach einem der Ansprüche 1 bis 8, bei dem eine Mittellinie (C) einer Rippe der Stegteilreihe (6) im mittleren Bereich, der Seite der Äquatorlinie (E) des Reifens am nächsten gelegen, zu einer axial inneren Seite mit Bezugnahme auf die Äquatorlinie (E) des Reifens vorgespannt wird, und bei dem eine Vielzahl von Vertiefungen (23) mit einer im Wesentlichen elliptischen Form in dieser Rippe ausgebildet ist, und wobei sich eine Hauptachse einer jeden der Vertiefungen (23) unter einem Winkel von 5-45° mit Bezugnahme auf die Breitenrichtung der Lauffläche erstreckt und eine Seite der Schulterstegteilreihe (8) in der Rippe auf der axial inneren Seite durch die sich linear erstreckende Umfangshauptrille (3) definiert wird.

14. Luftreifen nach Anspruch 13, bei dem mindestens ein Teil der Vertiefungen (23) mit einer Lamelle (Lamellen) (24) versehen ist, die sich in einer Richtung der Hauptachse erstreckt (erstrecken).

15. Luftreifen nach einem der Ansprüche 1 bis 14, bei dem die Rippe der Stegteilreihe (6) des mittleren Bereiches, der Äquatorlinie (E) des Reifens am nächsten gelegen, durch ein Paar von sich linear erstreckenden Umfangshauptrillen (3, 4) definiert wird, und bei dem eine Rillenbreite der Umfangshauptrille (3), die auf einer Seite der Schulterstegteilreihe (8) der axial inneren Seite angeordnet ist, breiter ausgeführt wird als eine Rillenbreite der Umfangshauptrille (4), die auf einer Seite der Schulterstegteilreihe (10) der axial äußeren Seite angeordnet ist.

16. Luftreifen nach einem der Ansprüche 1 bis 15, bei dem ein peripherer sich erhebender Abschnitt (25), der allmählich eine Verringerung der Oberflächenhöhe in Richtung von mindestens einem von einem Seitenrand eines Blocks und einem mittleren Bereich eines Blocks zeigt, in jedem der Blöcke (12) gebildet wird, die durch die seitlichen Rillen (11) in der Schulterstegteilreihe (9) der axial äußeren Seite definiert werden.

17. Luftreifen nach einem der Ansprüche 1 bis 16, bei dem eine Höhe eines vorderen Randes (26) und eine Höhe eines hinteren Randes (27) in einem Block, der durch die schrägen Rillen (13) in mindestens einer zweiten inneren Stegteilreihe (8) definiert wird, in der Breitenrichtung der Lauffläche unterschiedlich ausgeführt sind, und bei dem sich ein jeder der hohen Höhenabschnitte in der Umfangsrichtung der Lauffläche erstreckt, während die Positionen in der Breitenrichtung der Lauffläche in Übereinstimmung mit den Positionen in der Umfangsrichtung verändert werden.

18. Luftreifen nach einem der Ansprüche 1 bis 17, bei dem eine schräge Fläche (29), die allmählich eine Verringerung der Höhe in Richtung einer Oberseite zeigt, in einem spitzeckigen Abschnitt eines Blocks (26) gebildet wird, der durch mindestens eine von seitlicher Rille (3) und schräger Rille (13) definiert wird, die sich unter einem mittleren Winkel von nicht weniger als 45° mit Bezugnahme auf die Breitenrichtung der Lauffläche erstreckt.

19. Luftreifen nach einem der Ansprüche 1 bis 18, bei dem ein Vorsprung (32), der in eine Rille hinein vorsteht, in einer Rillenwand (31) der Umfangshauptrille (3) entgegengesetzt einer Rillenwand angeordnet ist, die sich zu mindestens einer von seitlicher Rille und schräger Rille (13) in einer Rillenöffnungsposition und einer Position entgegengesetzt der Breitenrichtung der Lauffläche öffnet.

20. Luftreifen nach einem der Ansprüche 1 bis 19, bei dem sich eine Rillentiefe der schrägen Rille (13), die sich unter einem mittleren Winkel von nicht weniger als 45° mit Bezugnahme auf die Breitenrichtung der Lauffläche erstreckt, von der Seite der Äquatorlinie (E) des Reifens in Richtung der Seite des Laufflächenendes vertieft.

21. Luftreifen nach einem der Ansprüche 1 bis 20, bei dem die Richtungen, in denen sich die in der zweiten inneren Stegteilreihe (8) mit Bezugnahme auf die Breitenrichtung ausgebildeten schrägen Rillen (13) erstrecken, abwechselnd in entgegengesetzten Richtungen in der Umfangsrichtung der Lauffläche ausgeführt werden.

22. Luftreifen nach einem der Ansprüche 1 bis 21, bei dem ein Integralwert der Steifigkeit in der Breitenrichtung der Lauffläche über eine gesamte Reifenaufstandslänge in einer jeden der Stegteilreihen (90, 60, 100, 110, 120), die durch die Umfangshauptrillen (2, 3, 4, 5) definiert werden, innerhalb eines Bereiches von 50 % von einem großen Wert zwischen gegenseitig benachbarten Stegteilreihen liegt.

23. Luftreifen nach einem der Ansprüche 1 bis 22, bei dem in einem Zustand, in dem der Reifen auf eine zugelassene Felge montiert und auf einen normalen Luftdruck aufgepumpt und unter einer Masse belastet wird, die der maximalen Belastbarkeit entspricht, eine effektive Reifenaufstandsfläche (Sout, Sin) auf entweder der axial inneren Seite oder der axial äußeren Seite größer ist als die auf der verbleibenden anderen Seite, und bei dem ein radialer Abstand von einer tangentialen Linie (T) auf der äußeren Seitenfläche der Lauffläche senkrecht zur Äquatorebene (EP) des Reifens bis zum Reifenaufstandsrand der Lauffläche in einer Situation des Füllens mit dem normalen Luftdruck auf der Montageseite mit der kleinen effektiven Reifenaufstandsfläche größer ausgeführt wird als auf der anderen Montageseite.

24. Luftreifen nach Anspruch 23, bei dem eine Beziehung zwischen einem Verhältnis der kleinen und der großen effektiven Reifenaufstandsfläche (S-groß/S-klein) und einem Verhältnis des großen und kleinen radialen Abstandes (H-groß/H-klein) Folgendes erfüllt: S-groß/S-klein = A x (H-groß/H-klein), worin A 1,0 bis 1,4 beträgt.

25. Reifen-Rad-Anordnung, die durch Montieren eines Luftreifens nach einem der Ansprüche 1 bis 24 auf ein Rad hergestellt wird, wobei ein Verbindungsabschnitt zwischen einer Felge (39) und einer Scheibe (4) des Rades (38) in Richtung einer äußeren Seite eines zu montierenden Fahrzeuges mit Bezugnahme auf die Äquatorebene (EP) des Reifens angeordnet wird.

## Revendications

1. Bandage pneumatique, comprenant trois ou plusieurs rainures circonférentielles principales (2, 3, 4, 5), positionnées de manière symétrique par rapport à une ligne équatoriale (E) du bandage pneumatique, et s'étendant de manière linéaire et continue dans la direction circonférentielle de la bande de roulement, formées dans une face de contact au sol (1) de la bande de roulement, pour former une ou plusieurs rangées de parties d'appui (6, 7, 8, 9) dans chaque région, la région centrale résultante et les deux régions latérales résultantes, dans lequel
plusieurs rainures inclinées (13) sont agencées dans une deuxième rangée interne de parties d'appui interne (8), agencée au niveau d'un côté de la ligne équatoriale (E), adjacente à une rangée de parties d'appui d'épaulement (7), au niveau du côté axialement interne ; et
ces rainures inclinées (13) sont ouvertes vers la rainure circonférentielle principale (2), agencée au moins près de la deuxième rangée interne de parties d'appui (8) du côté axialement interne;
**caractérisé en ce que**
une somme du volume des rainures dans une direction circonférentielle des rainures latérales formées dans une rangée de parties d'appui d'épaulement (7), correspondant à un côté axialement interne du bandage pneumatique monté sur un véhicule, par unité de largeur, est inférieure à une somme du volume des rainures dans la direction circonférentielle des rainures latérales (11) formées dans une rangée de parties d'appui d'épaulement (9) correspondant à un côté axialement externe du bandage pneumatique monté sur le véhicule ; et
la rangée de parties d'appui (6) dans la région centrale est formée en une nervure ; et
les rainures inclinées (13), s'étendent à un angle d'inclinaison moyen non inférieur à 45° par rapport à une direction de la largeur de la bande de roulement.

2. Bandage pneumatique selon la revendication 1, dans lequel le nombre des rainures circonférentielles principales (2, 3, 4, 5) correspond à 4 ou plus ; et
plusieurs rainures latérales (14), ouvertes au niveau d'une des deux extrémités vers la rainure circonférentielle principale (4, 5) et se terminant au niveau de l'autre extrémité dans la rangée de parties d'appui sont formées en une deuxième rangée externe de parties d'appui (10), agencée près du côté de la ligne équatoriale (E) du bandage pneumatique, dans la rangée de parties d'appui d'épaulement (9) du côté axialement externe.

3. Bandage pneumatique selon les revendications 1 ou 2, dans lequel la rangée de parties d'appui d'épaulement (7) du côté axialement interne est divisée en deux parties par une fine rainure (17), s'étendant dans une direction circonférentielle, un angle moyen de la rainure latérale (11) formée dans la rangée de parties d'appui d'épaulement (9) du côté axialement externe, par rapport à la direction de la largeur de la bande de roulement, n'étant pas supérieur à 15°.

4. Bandage pneumatique selon l'une quelconque des revendications 1 à 3, dans lequel la rangée de parties d'appui d'épaulement (7) du côté axialement interne est divisée en deux parties par une fine rainure (17), s'étendant dans une direction circonférentielle, une partie divisée agencée au niveau d'un côté de l'extrémité de la bande de roulement étant une nervure à largeur étroite (18), plusieurs petits trous (20) séparés de la rainure (17) étant formés dans l'autre partie divisée à grande largeur (19), pouvant être équipée de rainures latérales.

5. Bandage pneumatique selon les revendications 3 ou 4, dans lequel une largeur de rainure de la fine rainure (17) est plus grande dans un côté d'une surface de la bande de roulement qu'au fond de la rainure.

6. Bandage pneumatique selon l'une quelconque des revendications 4 à 5, dans lequel un volume total de plusieurs petits trous (20) formés dans la partie divisée à grande largeur (19) au niveau de la rangée de parties d'appui d'épaulement (7) du côté axialement interne dans la direction circonférentielle de la bande de roulement est rendu plus large sur un côté de la fine rainure (17) que sur un côté de la ligne équatoriale (E) du bandage.

7. Bandage pneumatique selon l'une quelconque des revendications 4 à 6, dans lequel la partie divisée à grande largeur comportant des petits trous (20) entre en contact avec le sol dans au moins une partie de la région formant les petits trous, lors de l'application d'un angle de carrossage de -0,5° en présence d'une charge représentant 40% d'une capacité de charge maximale.

8. Bandage pneumatique selon l'une quelconque des revendications 4 à 7, dans lequel une paroi latérale de la nervure à largeur étroite (18), agencée au niveau d'un côté de l'extrémité de la bande de roulement a une forme courbée, comportant au moins un centre de courbure au niveau d'un côté externe d'une ligne de profil de la section transversale.

9. Bandage pneumatique selon l'une quelconque des revendications 1 à 8, dans lequel une ligne médiane (C) d'une nervure de la rangée de parties d'appui (6) de la région centrale, agencée le plus près du côté de la ligne équatoriale (E) du bandage pneumatique, est poussée vers le côté axialement interne par rapport à la ligne équatoriale (E) du bandage pneumatique, plusieurs fines rainures dans le sens de la largeur (22) s'étendant de manière oblique par rapport à la direction de la largeur de la bande de roulement étant formées dans cette nervure.

10. Bandage pneumatique selon la revendication 9, dans lequel un angle d'inclinaison de la fine rainure dans le sens de la largeur (22) est un angle moyen compris dans l'intervalle allant de 5 à 55°.

11. Bandage pneumatique selon les revendications 9 ou 10, dans lequel la fine rainure dans le sens de la largeur (22) est formée de sorte à être inclinée dans une direction de la profondeur, sous forme d'une face courbée, à condition qu'elle soit séparée de chacune d'entre elles, une partie médiane étant délimitée dans la direction d'extension.

12. Bandage pneumatique selon l'une quelconque des revendications 9 à 11, dans lequel au moins une partie des fines rainures dans le sens de la largeur (22) se termine au niveau des deux extrémités dans la nervure.

13. Bandage pneumatique selon l'une quelconque des revendications 1 à 8, dans lequel une ligne médiane (C) d'une nervure de la rangée des parties d'appui de la région centrale (6), agencée le plus près du côté de la ligne équatoriale (E) du bandage pneumatique, est poussée vers le côté axialement interne par rapport à la ligne équatoriale (E) du bandage pneumatique, plusieurs évidements (23) ayant pratiquement une forme en ellipse étant formés dans cette nervure, un axe majeur de chacun des évidements (23) s'étendant à un angle de 5 à 45° par rapport à la direction de la largeur de la bande de roulement, et un côté de la rangée des parties d'appui d'épaulement (8) dans la nervure au niveau du côté axialement interne étant défini par la rainure circonférentielle principale (3) à extension linéaire.

14. Bandage pneumatique selon la revendication 13, dans lequel au moins une partie des évidements (23) comporte une (des) lamelle(s) (24), s'étendant dans la direction de l'axe majeur.

15. Bandage pneumatique selon l'une quelconque des revendications 1 à 14, dans lequel la nervure de la rangée de parties d'appui de la région centrale (6), agencée le plus près de la ligne équatoriale (E) du bandage pneumatique, est définie par une paire de rainures circonférentielles principales (3, 4), s'étendant de manière linéaire, une largeur de rainure de la rainure circonférentielle principale (3) agencée au niveau d'un côté de la rangée de parties d'appui d'épaulement (8) du côté axialement interne, étant supérieure à une largeur de rainure de la rainure circonférentielle principale (4) agencée au niveau d'un côté de la rangée de parties d'appui d'épaulement (10) du côté axialement externe.

16. Bandage pneumatique selon l'une quelconque des revendications 1 à 15, dans lequel une partie périphérique surélevée (25), réduisant progressivement une hauteur de surface vers au moins une région, un bord latéral d'un pavé ou une région centrale d'un pavé, est formée dans chacun des pavés (12) définis par les rainures latérales (11) dans la rangée de parties d'appui d'épaulement (9) du côté axialement externe.

17. Bandage pneumatique selon l'une quelconque des revendications 1 à 16, dans lequel une hauteur d'un bord avant (26) et une hauteur d'un bord arrière (27) dans le pavé défini par les rainures inclinées (13) dans au moins une deuxième rangée interne de parties d'appui (8) sont différentes dans la direction de la largeur de la bande de roulement, chaque partie des parties à grande hauteur s'étendant dans la direction circonférentielle de la bande de roulement, tout en changeant les positions dans la direction de la largeur de la bande de roulement, en fonction des positions dans la direction circonférentielle.

18. Bandage pneumatique selon l'une quelconque des revendications 1 à 17, dans lequel une face inclinée (29), réduisant progressivement une hauteur vers une partie supérieure, est formée dans une partie de coin arquée d'un pavé (26) défini par au moins une rainure, la rainure latérale (3) ou la rainure inclinée (13), s'étendant à un angle moyen d'au moins 45° par rapport à la direction de la largeur de la bande de roulement.

19. Bandage pneumatique selon l'une quelconque des revendications 1 à 18, dans lequel une partie en saillie (32), débordant dans une rainure, est agencée dans une paroi de rainure (31) de la rainure circonférentielle principale (3), opposée à une paroi de rainure ouverte vers au moins une rainure, la rainure latérale ou la rainure inclinée (13), au niveau d'une position d'ouverture de la rainure et d'une position opposée à la direction de la largeur de la bande de roulement.

20. Bandage pneumatique selon l'une quelconque des revendications 1 à 19, dans lequel une profondeur de rainure de la rainure inclinée (13), s'étendant à un angle moyen non inférieur à 45° par rapport à la direction de la largeur de la bande de roulement, est accrue du côté de la ligne équatoriale (E) du bandage pneumatique vers le côté de l'extrémité de la bande de roulement.

21. Bandage pneumatique selon l'une quelconque des revendications 1 à 20, dans lequel les directions d'extension des rainures inclinées (13) formées dans la deuxième rangée interne des parties d'appui (8) par rapport à la direction de la largeur, sont exécutées alternativement dans des directions opposées dans la direction circonférentielle de la bande de roulement.

22. Bandage pneumatique selon l'une quelconque des revendications 1 à 21, dans lequel une valeur intégrale de la rigidité dans la direction de la largeur de la bande de roulement au-delà d'une longueur de contact au sol totale dans chacune des rangées de parties d'appui (90, 60, 100, 110, 120) définies par les rainures circonférentielles principales (2, 3, 4, 5) est comprise dans un intervalle représentant 50% d'une valeur élevée entre des rangées de parties d'appui mutuellement adjacentes.

23. Bandage pneumatique selon l'une quelconque des revendications 1 à 22, dans lequel, lorsque le bandage pneumatique est monté sur une jante approuvée et gonflé à une pression d'air normale, en présence d'une charge correspondant à la capacité de charge maximale, une surface de contact au sol effective (S-hors, S-en) au niveau du côté axialement interne ou du côté axialement externe est supérieure à celle de l'autre côté restant, une distance radiale d'une ligne tangentielle (T) sur la surface latérale externe de la bande de roulement, perpendiculaire au plan équatorial (EP) du bandage pneumatique, vers le bord de contact au sol de la bande de roulement, lors d'un remplissage de pression d'air normale, est plus grande au niveau du côté de montage, comportant une surface de contact au sol effective réduite, qu'au niveau de l'autre côté de montage.

24. Bandage pneumatique selon la revendication 23, dans lequel une relation entre un rapport entre des surfaces de contact au sol effectives petite et grande (S-grande/S-petite) et un rapport entre une distance radiale grande et petite (H-grande/H-petite) satisfont la relation S-grande/S-petite = A x (H-grande/H-petite), dans laquelle la valeur de A est comprise entre 1,0 et 1,4.

25. Assemblage d'un bandage pneumatique et d'une roue, formé par assemblage d'un bandage pneumatique selon l'une quelconque des revendications 1 à 24 sur une roue, dans lequel une partie de connexion entre une jante (39) et un disque (4) de la roue (38) est agencée vers un côté externe d'un véhicule de montage, par rapport au plan équatorial (EP) du bandage pneumatique.
